# EUROPEAN PATENT APPLICATION

(11) **EP 4 811 137 A1**
(43) Date of publication of application: **23.09.2026**
(21) Application number: 25223019.8
(22) Date of filing: 12.12.2025
(51) Int. Cl.: G06F 11/30, G06F 11/34

(54) **METHOD AND APPARATUS FOR ADDRESS RANGE FILTERING IN PERFORMANCE MONITORING**

(30) Priority: 17.03.2025 US 202519081512
(71) Applicant: INTEL Corporation, Santa Clara, CA 95054 (US)
(72) Inventor: PRASAD, Aravinda, 560064 Bangalore (IN); KUMAR, Sandeep, 562125 Bengaluru (IN); YASIN, Ahmad, 1790700 Kafr Manda (IN); SUBRAMONEY, Sreenivas, 560103 Bangalore (IN)
(74) Representative: Goddar, Heinz J.

(57) **Abstract**

Methods, apparatus, and computer programs are disclosed for address range filtering in performance monitoring. One method comprises generating a set of performance monitoring events that each specify an address range within one or more address ranges of memory of a computing system or an application executing in the computing system for which memory access data is to be collected and performing memory access data collection based on the set of performance monitoring events for the one or more address ranges.

## Description

### BACKGROUND ART

Data-hungry applications that require terabytes of memory have become widespread in recent years. To meet the memory needs of these applications, data centers are embracing tiered memory architectures with near and far memory tiers. Yet memory tiering is only as good as telemetry that collects, analyzes, and reports real-time performance and usage data from corresponding processors, including detecting and categorizing data based on its frequency of access, where frequently accessed data, "hot data," needs to be readily available for processing (in a higher tier) and rarely accessed data "cold data," be moved to slower or secondary storage (in a lower tier). Effective use of tiered memory requires precise and timely identification of hot and cold data sets and then proactively placing them in appropriate tiers.

While sampling-based performance monitoring has been prevalent in identifying the hot and cold data in memory, its efficiency deteriorates significantly when application footprint and/or hot regions (regions to store hot data) escalate to terabyte (TB) scale.

### BRIEF DESCRIPTION OF THE DRAWINGS

The disclosure may best be understood by referring to the following description and accompanying drawings that are used to show embodiments of the disclosure.
FIG. 1 is a block diagram illustrating a processor to implement address range filtering in performance monitoring per some embodiments.
FIG. 2A illustrates address range filtering that results in convergence to hot data spots per some embodiments.
FIG. 2B illustrates address range filtering that results in iterative profiling on a divided address space per some embodiments.
FIG. 3 illustrates a flow diagram to show the operations to implement address range filtering in performance monitoring per some embodiments.
FIG. 4A is a block diagram illustrating both an example in-order pipeline and an example register renaming, out-of-order issue/execution pipeline.
FIG. 4B is a block diagram illustrating both an example in-order architecture core and an example register renaming, out-of-order issue/execution architecture core to be included in a processor per some embodiments.
FIG. 5 illustrates an example computing system.
FIG. 6 illustrates a block diagram of an example processor and/or System on a Chip (SoC) that may have one or more cores and an integrated memory controller.
FIG. 7 is a block diagram illustrating a computing system 700 configured to implement one or more aspects of the examples described herein.
FIG. 8A illustrates examples of a parallel processor.
FIG. 8B illustrates examples of a block diagram of a partition unit.
FIG. 8C illustrates examples of a block diagram of a processing cluster within a parallel processing unit.
FIG. 8D illustrates examples of a graphics multiprocessor in which the graphics multiprocessor couples with the pipeline manager of the processing cluster.
FIGS. 9A-9C illustrate additional graphics multiprocessors, according to examples.
FIG. 10 shows a parallel compute system 1000, according to some examples.
FIGS. 11A-11B illustrate a hybrid logical/physical view of a disaggregated parallel processor, according to examples described herein.
FIG. 12 is a block diagram of another example of a graphics processor.
FIG. 13 is a block diagram illustrating the use of a software instruction converter to convert binary instructions in a source ISA to binary instructions in a target ISA according to examples.
FIG. 14 is a block diagram illustrating an IP core development system that may be used to manufacture an integrated circuit to perform operations according to some examples.

### DETAILED DESCRIPTION

In the following description, numerous specific details are set forth. However, it is understood that embodiments of the disclosure may be practiced without these specific details. In other instances, well-known circuits, structures, and techniques have not been shown in detail in order not to obscure the understanding of this description.

Bracketed text and blocks with dashed borders (such as large dashes, small dashes, dot-dash, and dots) may be used to illustrate optional operations that add additional features to the embodiments of the disclosure. Such notation, however, should not be taken to mean that these are the only options or optional operations, and/or that blocks with solid borders are not optional in some embodiments of the disclosure.

References in the specification to "one embodiment," "an embodiment," "an example embodiment," etc. indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The terms "connected" means a direct electrical or magnetic connection between the things that are connected, without any intermediary devices, while the term "coupled" means either a direct electrical or magnetic connection between the things that are connected or an indirect connection through one or more passive or active intermediary devices. The term "circuit" means one or more passive and/or active components that are arranged to cooperate with one another to provide a desired function. The terms "computing system," "compute system," "computer system," and "computer" are used interchangeably herein. A "set," as used herein, refers to any positive whole number of items including one item.

### Performance Monitoring with Address Range Filtering

Hardware counters and/or performance monitoring units (PMUs) are widely used in a computer processor to monitor the processor's performance and as a telemetry technique to identify an application's hot and cold data pages. The main limitation of hardware counters is that they are based on sampling, where PMUs sample the hardware events and the performance monitoring accuracy depends on the sampling rate. Increasing the sampling rate improves the probability of hot page detection but can negatively affect the application performance, as higher sampling rates result in more frequent PMU interruptions to the operating system (OS).

It has been observed that the efficiency of PMU deteriorates with the increase in either hot data region or memory footprint. For example, consider an application with a 5 gigabyte (GB) footprint having 20% or 1GB hot region with the page size of 4 kilobytes (KB), the application thus has 1GB/4KB = 262,144 hot pages (pages containing hot data). When the PMU generates 10,000 samples per second, 600,000 events are generated in a profiling window of 60 seconds, enough to identify the entire 262,144 hot pages using these events. Yet data-hungry applications now require terabytes (TB) of memory, and when the application footprint is 5TB with the same 20% hot regions, the number of the hot pages is now 1TB/4KB = 2⁴⁰ ÷ 2¹² = 2²⁸ = 268,435,456, and the same 600,000 events in the profiling window can precisely identify merely 0.22% of the hot pages. While the page size can be enlarged for a bigger memory to Megabytes (MB) or even GB, events such as retired load/store instructions or level 3 (L3) cache misses are independent of the page size. Thus, the present sampling-based performance monitoring is insufficient for profiling data access.

As PMUs cannot generate enough events to cover all the hot data pages in the applications, profiling the entire address space of a terabyte scale application is not feasible. Embodiments of the present disclosure implement PMU address range filtering technique to build efficient solutions for telemetry or other applications.

The PMU address range filtering in these embodiments differs from the techniques to sample the entire address space and then filter the resulting records with address filtering. For example, the Precise Event-Based Sampling (PEBS) and Last Branch Record (LBR) implemented in some processors can record addresses of memory access, which are then filtered in software based on addresses. Other processors implement Embedded Trace Macrocell (ETM) that supports instruction-level tracing and allows address-based filtering in debugging scenarios. These techniques suffer from the same low detection coverage for terabyte scale applications due to the grossly insufficient sampling rate (e.g., 0.22% in the example of 10,000 samples/second in the example above). The subsequent filtering on the detected small memory coverage, while may make the analysis more efficient, does not mitigate the low detection coverage of the sampled record.

In contrast, the PMU address range filtering in the disclosed embodiments generates performance monitoring events, each specifying an address range for which memory access data is to be collected, and then these performance monitoring events cause memory access data collection at the specified address range. Instead of collecting the memory access data from the whole address space (which can be at terabyte scale and beyond) and then filtering the collected information based on an address range, the performance monitoring events target the specified address range, thus the performance monitoring events themselves are narrowly focused on the address range instead of the whole address space. Such approach is agnostic of the scale of the address space and thus scalable to any size of address space. Note that the memory access data includes information about read access and write access of data from and to storages (e.g., caches and/or memory pages). For example, the read access can be loading/fetching/prefetching data/instructions from the storages while the write access can be storing data/instructions to the storages. The memory access data may include how often an address/memory page is accessed, the time and/or bandwidth the accesses take, the memory access patterns (e.g., sequential or random), cache hit and miss rates, access stride, page fault rate, and memory contention (multiple processors/cores competing for the same address/memory page).

With the address range filtering through the PMU, the data collection focuses on the identified address range, and the same existing common sampling rates and profile windows applied to the address range are sufficient (e.g., enough to identify hot pages in an identified 1GB address range with 10,000 samples/second and profiling widow of 60 seconds).

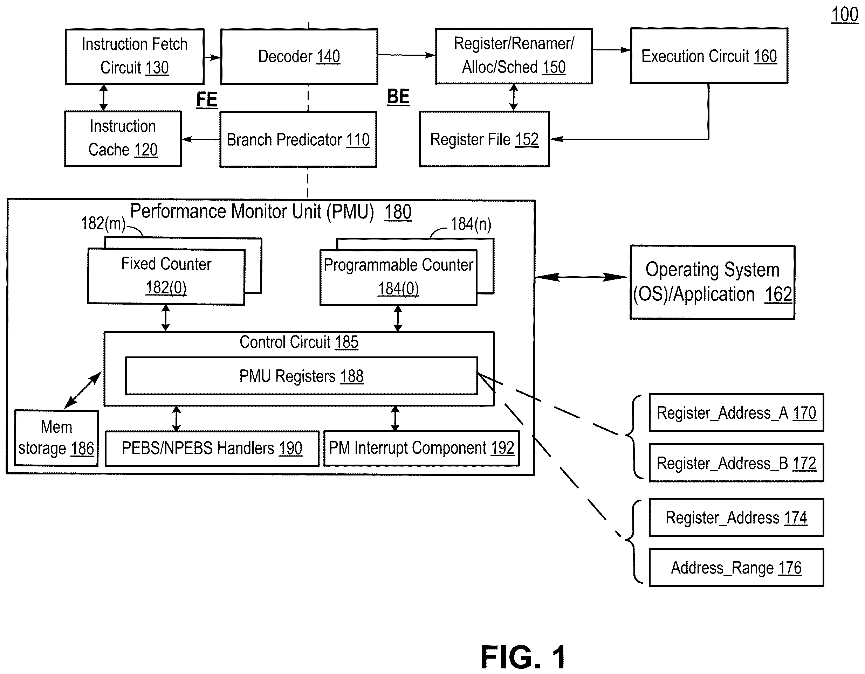

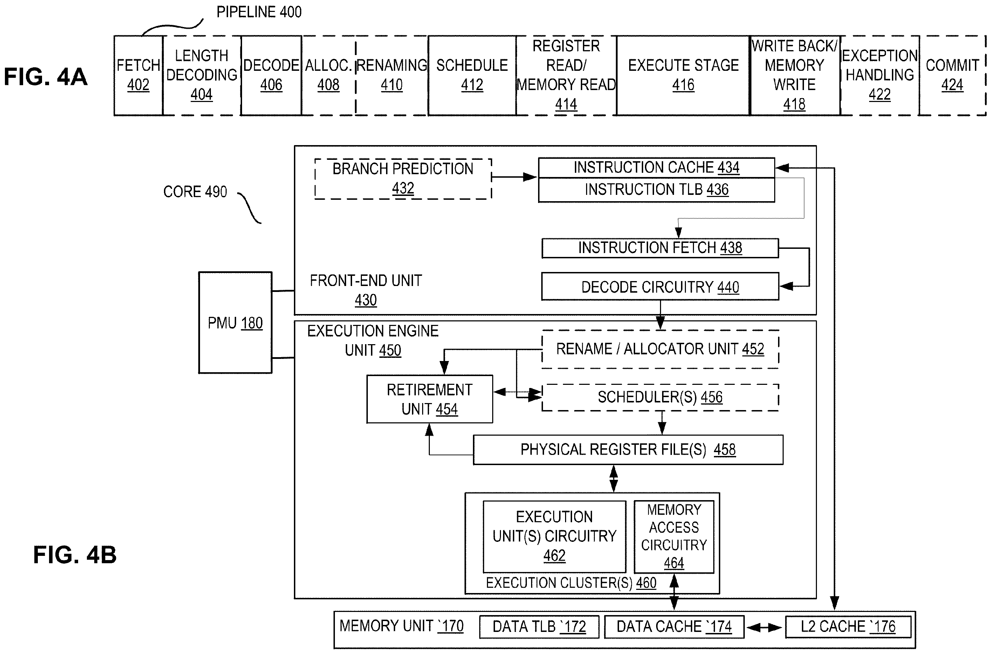

FIG. 1 is a block diagram illustrating a processor to implement address range filtering in performance monitoring per some embodiments. Processor 100 is shown at a high level and illustrates a general pipeline architecture of a processing engine such as a processor core with front end (FE) and back end (BE) portions. Multiple pipelines may be present in one or more cores. Processor 100 may be implemented as a processor or processor cores discussed herein relating to FIGS. 4 to 14. A performance monitor unit (PMU) 180 is implemented as circuitry within or coupled to processor 100. PMU 180 tracks and measures hardware events as the processor 100 executes code and it may also be referred to as a performance monitor, a performance counter unit (PCU), an event monitoring unit, a process event unit, a monitoring and debugging unit, or similar terms.

A branch predictor 110 may, based upon history of branch direction, predict whether a branch is taken or not taken and provide this information to an instruction cache 120. Instruction cache 120 is coupled to an instruction fetch circuit 130. Instruction fetch circuit 130 may fetch instructions, either from instruction cache 120 or from another storage. In turn, fetched instructions, which at this point may be in the form of macro-instructions, are provided to a decoder 140. In some embodiments, decoder 140 may decode each macro-instruction into one or more micro-operations.

Decoder 140 provides the decoded instructions to a register renamer 150 which, as shown, also may perform allocation and scheduling operations to schedule incoming instructions for execution within an execution circuit 160. Execution circuit 160 may include multiple execution units such as integer and floating-point units to perform operations on incoming source operands. Results are provided via a writeback path to register file 152.

Performance monitor unit (PMU) 180 is coupled to both the front end and back end of processor 100 as shown. In some embodiments, however, a PMU may be coupled solely to back-end circuit portion. In one or more implementations, PMU 180 may be a distributed hardware circuit that includes various storages, e.g., registers or other counters, to perform counting of various events or other operations, under control of control circuit 185. As shown, control circuit 185 may include (or be coupled to) a set of PMU registers 188, which may include configuration, control, and status registers that may be used for enabling and configuring fixed counters described herein. The set of PMU registers 188 includes model-specific registers (MSRs), event select registers (ESRs), and/or performance counter registers (PCRs) in some embodiments.

PMU 180 includes a set of fixed counters 182 0-m and a set of programmable counters 184 0-n. The fixed counters monitor a small, predefined set of essential events (e.g., instructions retired, the total clock cycles) that are crucial for performance analysis, while the programmable counters can be programmed to measure a wide range of hardware events, such as cache misses, branch mispredictions, load/store operations. The PMU address range filtering discussed herein uses the programming counters in some embodiments. While FIG. 1 shows the various counters in a performance monitor, the counters may reside in a bus cluster unit or other locations of processor 100 in some embodiments.

Additionally, a number of Precise Event Based System (PEBS) and/or non-PEBS (NPEBS) handlers 190 may be implemented as circuitry/logic within or coupled to PMU 180. With hardware assistance, a PEBS handler captures data such as the exact instruction pointer (IP) and data address involved in cache misses, memory loads, or stores; and PEBS records can include physical addresses accessed during specific memory events (e.g., cache mises or translation lookaside buffers (TLB) misses). The PEBS handler may automatically save detailed state information (like the instruction pointer, register contents, and memory addresses) into a dedicated storage (e.g., memory storage 186). An NPEBS handler relies on regular performance counters, which may not point precisely to the instruction that caused the event. While PEBS/NPEBS handlers are shown as an example, other data capture techniques are used alternative embodiments. For example, Instruction-Based Sampling (IBS) may be used to capture detailed information about specific instructions and hardware events; and statistical profiling extension (SPE) may be used to provide precise samples of hardware events, capturing architectural state and memory addresses. The embodiments disclosed herein are agnostic to how the performance data is captured.

A performance monitoring interrupt (PMI) component 192 triggers an interrupt, handled by Operating system (OS) and/or application 162, when a performance monitoring counter reaches a predefined threshold. The interrupt allows hardware/software tools to capture and analyze hardware events in real time thus profile processor/application performance.

OS and/or application 162 interacts with PMU 180 to profile the processor/application performance with address range filtering in some embodiments. To profile the processor's performance, PMU 180 may collect performance data for the OS across the entire system, including all running processes, kernel activity, and even idle states. The OS may specify one or more address ranges for which memory access data is to be collected. To profile an application, PMU 180 may collect performance data based on specific characteristics of the application.

OS/application 162 may indicate the address range to monitor through a set of function calls or instructions to PMU 180. These function calls/instructions may be used by PMU 180 to configure a set of control registers (e.g., PMU registers 188). The set of control registers may, based on the set of function calls/instructions, configure which events to count or sample, which hardware events to track, and when to trigger an interrupt.

In some embodiments, OS/application 162 may store values into a pair of registers to specify an address range to monitor. For example, the pair of registers may be (1) register 170 that indicates the starting address of the address range (PMU_MEM_ADDR0_A.START) and (2) register 172 that indicates the end address of the address range (PMU_MEM_ADDR0_B.END). Alternatively, the pair of registers may be (3) register 174 that indicates the starting address of the address range and (4) register 176 that indicates the length of the range (e.g., 4KB). Multiple instances of such register pairs may be configured and deployed to support multiple regions simultaneously if needed. An instruction may include operands that specify the values to be stored in the pairs of registers.

Note that these addresses may be physical addresses or virtual addresses of the memory of processor 100. A physical address is the actual location in the physical memory. After address translation, processor 100 accesses the data at this physical location. The physical address is also referred to as machine address or real address. A virtual address is used by applications and OS and mapped to a physical address by the OS and hardware (e.g., the Memory Management Unit (MMU)). A virtual address is also referred to as a linear address or logical address. The PMU address range filtering may be referred to as operating at a physical address profiling mode when the address range filtering is applied to physical addresses, while it may be referred to as operating at a virtual address profiling mode when the address range filtering is applied to virtual addresses.

In some embodiments, the existing PMU event may be expanded to support the address range filtering. For example, an instruction to count number of retired (non-speculative) instructions who induced a memory access is MEM_INST_RETIRED. The expansion would create a derived event that fires only if the memory access of address x is within the configured range, e.g., PMU_MEM_ ADDR0_A.START ≤ x ≤ PMU_MEM_ ADDR0_B.END. This requires processor 100 to figure out the full memory address during execution stage, and the address comparator compares the calculated full memory address against a target address or address range. Depending on whether the address to be monitored is a virtual address or physical address, the address comparison may be performed prior to or after TLB translation.

In some embodiments, a precise event routed through the Precise Event Based Sampling (PEBS) is preferred. The address range filtering through PEBS (e.g., coordinated by a PEBS handler 190) enables buffering hundreds of samples in a memory buffer before interrupting Operating system (OS) and/or application 162. By reducing the frequency of interruptions while still collecting detailed event data, PEBS further reduces overhead (primary limited by the number of system interrupts in this case) and increase profiling efficiency.

Making the address range filtering a precise event not only provides the memory access address to software but also dumps the Instruction Pointer (IP) - also known as program counter, which generated the access to help software to map the IP to source code / data-structure - as well as other profiling information such as TLB and cache access details.

The address range filtering may be implemented in a variety of scenarios to provide different services, and a few are outlined herein.

### Application-hinted profiling

To profile an application, PMU 180 may collect performance data based on specific characteristics of the application. For example, certain parts of the corresponding application address space can have dynamic memory access patterns and are thus sensitive to memory tiering, while other parts of the address space can have known access patterns and thus can be statically mapped to different memory tiers.

One example of characteristics of application relating to memory access is in the training of a graphic neural network (GNN), where the long-lived tensors that are used in forward pass are later used only in the backward pass to compute the gradient. Hence, these tensors can be statically placed across memory tiers without the need for profiling. These tensors may then be placed in slow memory after the forward pass and prefetch into fast memory just before the backward pass. The GNN training application then may give a hint to PMU 180 not to monitor the address ranges in which these tensors are placed.

Instead, the address ranges that are sensitive to memory tiering can be provided as hints from the applications (e.g., by developers of the application) and only such address ranges are targeted for profiling. The hints may be provided in corresponding instructions each with one or more operands (e.g., indicating the address ranges) based on which PMU operates. This improves telemetry, because, instead of generating events across the entire terabyte-scale virtual address space which contains both sensitive and non-sensitive regions, PMU range profiling generates events only for the application targeted/hinted ranges. This generates high quality telemetry data for address ranges of interest. The hints may be provided as address ranges specified with pairs of registers 170-172 and/or 174-176 discussed herein above.

### Converge to hot data spots at scale

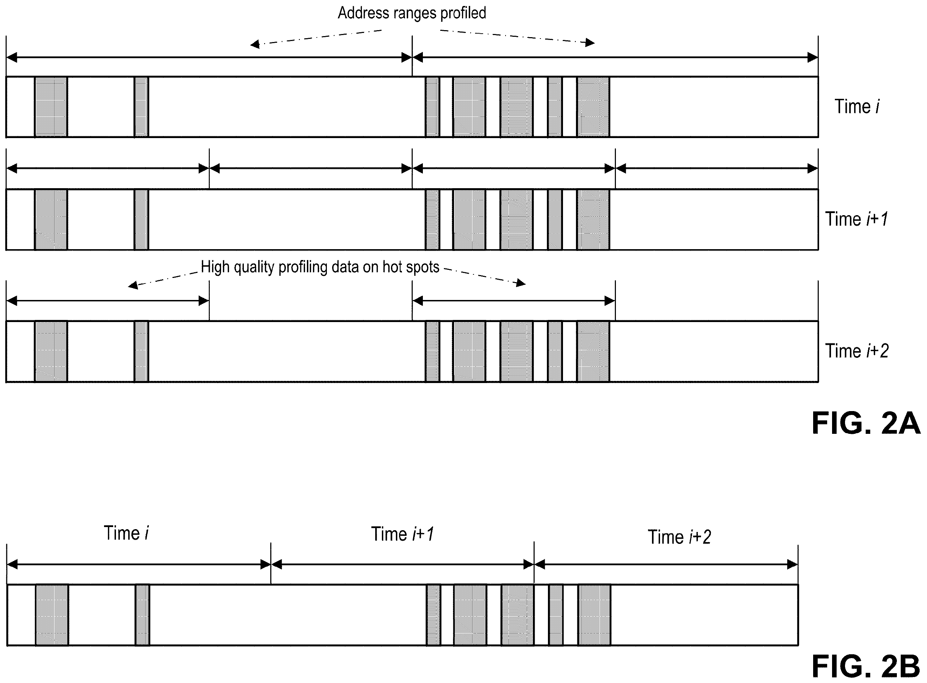

In some embodiments, the address range filtering may be used to quickly converge to hot data spots in profiling. FIG. 2A illustrates application profiling converging to hot data spot through address range filtering per some embodiments. Hot data spots are typically seen in applications that exhibit Gaussian and Zipfian memory access patterns. Quickly converging the profiling to hot data spots can be achieved with address range filtering by iterative divide and conquer techniques.

FIG. 2A illustrates address range filtering that results in convergence to hot data spots per some embodiments. Initially, the address space (e.g., a virtual address space for a terabyte scale application) is divided into two regions (at Time i) and each address range of these regions is profiled independently. Next (at Time i + 1) the regions that had memory accesses detected (both regions in this example) are further split into smaller four regions which are profiled independently. At the next time (at Time i + 2), the first and third subregions are profiled, while the second and third regions that had no memory accesses detected at Time i + 1 are skipped. The binary search approach, along with other iterative divide and conquer techniques, ensures the address range for profiling is quickly converged to generate high quality telemetry data on hot data spots.

While the figure shows that only the regions with no memory access are ignored, regions with memory access below a threshold (or meeting another criterium) may be ignored as well so that the performance monitoring may focus on more active regions. The convergence may be achieved by starting with the whole address space (e.g., the virtual address space for terabyte scale application) and generating performance monitoring events specifying smaller address ranges (in which memory access is deemed worthy of monitoring) at each iteration; or starting with a specific address range, and further iteratively dividing the specific address range into subsections, and generating performance monitoring events specifying subsections at each iteration in the similar manner.

### Iterative profiling

In some embodiments, an application's virtual space may be divided into smaller regions and each smaller region is then profiled individually by iterating over these regions over time. FIG. 2B illustrates address range filtering that results in iterative profiling on a divided address space per some embodiments. The application virtual space (e.g., terabyte scale or more) may be divided into smaller regions/subsections, and each region is profiled at a time slot sequentially on the smaller regions/subsections.

Similar to the convergence to hot data spot, the iterative profiling may start with the whole address space and generating performance monitoring events specifying smaller address ranges (in which memory access is deemed worthy of monitoring) at each iteration; or starting with a specific address range, and further iteratively dividing the specific address range into subsections, and generating performance monitoring events specifying subsections at each iteration in the similar manner.

Memory tiering decisions can then be based on (i) memory accesses in the individual regions, or (ii) aggregation of memory accesses over selected regions. The software can vary the number of regions and the size of the regions at every profiling window to tune the telemetry solutions as needed.

### Operations in Some Embodiments

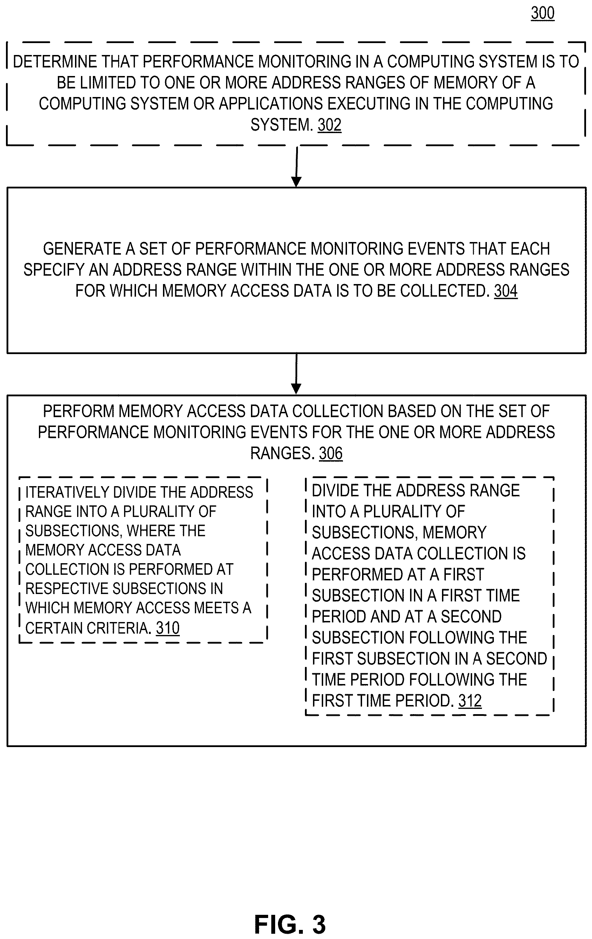

FIG. 3 illustrates a flow diagram to show the operations to implement address range filtering in performance monitoring per some embodiments. The operations in method 300 may be performed by a processor/core discussed herein.

Optionally at reference 302, performance monitoring is determined to be limited to one or more address ranges of memory of a computing system or applications executed in the computing system. The address ranges of the memory are applicable to track memory access to physical addresses while the address ranges of the applications are to track memory access to virtual addresses.

At reference 304, responsive to the determination, a set of performance monitoring events are generated, each specifying an address range within the one or more address ranges for which memory access data is to be collected. At reference 306, memory access data collection is performed based on the set of performance monitoring events for the one or more address ranges. The generation of the set of performance monitoring events and the memory access data collection is performed by PMU 180 (or other performance monitoring unit to track and measure hardware events) in some embodiments.

In some embodiments, the memory access data is used to determine which one or more corresponding memory pages are hot based on memory access frequency meeting a criterium. In some embodiments, a memory page is deemed on once the memory access frequency crosses a threshold.

In some embodiments, the memory of the computing system includes a first memory tier and a second memory tier, wherein the first memory tier offers faster access than the second memory tier, and wherein the one or more corresponding memory pages that are hot are moved from the second memory tier to the first memory tier. The data migration is thus based on the memory access data collection with address range filtering.

In some embodiments, the memory access data collection is for profiling of the application executing in the computing system, and limiting the performance monitoring to the one or more address ranges of the application is determined based on characteristics of the application. For example, the application may include address ranges that are sensitive to memory tiering, and the memory access data collection may thus focus on these address ranges.

In some embodiments, the address range is specified based on a hint provided by the application executing in the computing system. For example, the hint may specify an address range, which may be used to configure a pair of registers 188.

In some embodiments, the address range is specified by a pair of registers that indicate a starting address and an end address or the starting address and length of the range.

In some embodiments, performing the memory access data collection for the address range as shown at reference 310 comprises iteratively dividing the address range into a plurality of subsections, where the memory access data collection is performed at respective subsections in which memory access meets a certain criterion. For example, the criterion may be that a subsection in which memory access frequency crosses a certain threshold. These operations are discussed relating to FIG. 2A and may be used to converge to hot data spots as discussed.

In some embodiments, performing the memory access data collection for the address range as shown at reference 312 comprises dividing the address range into a plurality of subsections, memory access data collection is performed at a first subsection in a first time period and at a second subsection following the first subsection in a second time period following the first time period. These operations are discussed in more detail relating to Figure 2B.

In some embodiments, the memory access data collection for the address range is an extension of an existing performance monitoring event, wherein the extension of the existing performance monitoring event performs the memory access data collection only upon memory access being within the address range.

The embodiments of the disclosure generate performance monitoring events targeting specific address ranges instead of collecting the memory access data from the whole address space. The targeted memory access data collection allows sufficient samples to understand the memory access in the specified address ranges so that the more accurate understanding of the memory access may be used by the computing system to arrange the memory more efficiently. The accurate understanding is critical in many applications, particularly in data-hungry applications that require terabytes of memory and beyond. For example, the data may be stored in a tiered memory system more efficiently, where the data deemed not frequently accessed (cold data) may be stored further away from the processor execution circuitry while the data deemed frequently accessed (hot data) may be moved closer to the processor.

The figures and related discussion below describe a number of computing systems and processors in which embodiments in this disclosure may be implemented as examples, and the embodiments are not limited to these exemplary systems and processors. These examples of computing systems and processors may be implemented in a variety of configurations and form factors, including but not limited to desktop, laptop, handheld personal computers, servers, workstations, game consoles, Internet of Things (IoT) devices, automotive devices, and/or embedded systems (e.g., microcontrollers).

### Example Core Architectures - In-order and out-of-order core block diagram

FIG. 4A is a block diagram illustrating both an example in-order pipeline and an example register renaming, out-of-order issue/execution pipeline according to examples. FIG. 4B is a block diagram illustrating both an example in-order architecture core and an example register renaming, out-of-order issue/execution architecture core to be included in a processor per some embodiments. The solid lined boxes in FIGS. 4A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 4A, a processor pipeline 400 includes a fetch stage 402, an optional length decoding stage 404, a decode stage 406, an optional allocation (Alloc) stage 408, an optional renaming stage 410, a schedule (also known as a dispatch or issue) stage 412, an optional register read/memory read stage 414, an execute stage 416, a write back/memory write stage 418, an optional exception handling stage 422, and an optional commit stage 424. One or more operations can be performed in each of these processor pipeline stages. For example, during the fetch stage 402, one or more instructions are fetched from instruction memory, and during the decode stage 406, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 406 and the register read/memory read stage 414 may be combined into one pipeline stage. In some examples, during the execute stage 416, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 4B may implement the pipeline 400 as follows: 1) the instruction fetch circuitry 438 performs the fetch and length decoding stages 402 and 404; 2) the decode circuitry 440 performs the decode stage 406; 3) the rename/allocator unit circuitry 452 performs the allocation stage 408 and renaming stage 410; 4) the scheduler(s) circuitry 456 performs the schedule stage 412; 5) the physical register file(s) circuitry 458 and the memory unit circuitry 470 perform the register read/memory read stage 414; the execution cluster(s) 460 perform the execute stage 416; 6) the memory unit circuitry 470 and the physical register file(s) circuitry 458 perform the write back/memory write stage 418; 7) various circuitry may be involved in the exception handling stage 422; and 8) the retirement unit circuitry 454 and the physical register file(s) circuitry 458 perform the commit stage 424.

FIG. 4B shows a processor core 490 including front-end unit circuitry 430 coupled to execution engine unit circuitry 450, and both are coupled to memory unit circuitry 470. The core 490 may be a reduced instruction set architecture computing (RISC) core, a complex instruction set architecture computing (CISC) core, a very long instruction word (VLIW) core, or a hybrid or alternative core type. As yet another option, the core 490 may be a special-purpose core, such as, for example, a network or communication core, compression engine, coprocessor core, general purpose computing graphics processing unit (GPGPU) core, graphics core, or the like. Note that PMU 180 may be coupled with front-end unit 430 and/or execution engine unit 450; alternatively, PMU 180 may be implemented within front-end unit 430 and/or execution engine unit 450.

The front-end unit circuitry 430 may include branch prediction circuitry 432 coupled to instruction cache circuitry 434, which is coupled to an instruction translation lookaside buffer (TLB) 436, which is coupled to instruction fetch circuitry 438, which is coupled to decode circuitry 440. In some examples, the instruction cache circuitry 434 is included in the memory unit circuitry 470 rather than the front-end circuitry 430. The decode circuitry 440 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 440 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 440 may be implemented using various different mechanisms. Examples of suitable mechanisms include, but are not limited to, look-up tables, hardware implementations, programmable logic arrays (PLAs), microcode read only memories (ROMs), etc. In some examples, the core 490 includes a microcode ROM (not shown) or other medium that stores microcode for certain macroinstructions (e.g., in decode circuitry 440 or otherwise within the front-end circuitry 430). In some examples, the decode circuitry 440 includes a micro-operation (micro-op) or operation cache (not shown) to hold/cache decoded operations, micro-tags, or micro-operations generated during the decode or other stages of the processor pipeline 400. The decode circuitry 440 may be coupled to rename/allocator unit circuitry 452 in the execution engine circuitry 450.

The execution engine circuitry 450 includes the rename/allocator unit circuitry 452 coupled to retirement unit circuitry 454 and a set of one or more scheduler(s) circuitry 456. The scheduler(s) circuitry 456 represents any number of different schedulers, including reservation stations, central instruction window, etc. In some examples, the scheduler(s) circuitry 456 can include arithmetic logic unit (ALU) scheduler/scheduling circuitry, ALU queues, address generation unit (AGU) scheduler/scheduling circuitry, AGU queues, etc. The scheduler(s) circuitry 456 is coupled to the physical register file(s) circuitry 458. Each of the physical register file(s) circuitry 458 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 458 includes vector registers unit circuitry, writemask registers unit circuitry, and scalar register unit circuitry. These register units may provide architectural vector registers, vector mask registers, general-purpose registers, etc. The physical register file(s) circuitry 458 is coupled to the retirement unit circuitry 454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 454 and the physical register file(s) circuitry 458 are coupled to the execution cluster(s) 460. The execution cluster(s) 460 includes a set of one or more execution unit(s) circuitry 462 and a set of one or more memory access circuitry 464. The execution unit(s) circuitry 462 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 456, physical register file(s) circuitry 458, and execution cluster(s) 460 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 464). It should also be understood that where separate pipelines are used, one or more of these pipelines may be out-of-order issue/execution and the rest in-order.

In some examples, the execution engine unit circuitry 450 may perform load store unit (LSU) address/data pipelining to an Advanced Microcontroller Bus (AMB) interface (not shown), and address phase and writeback, data phase load, store, and branches.

The set of memory access circuitry 464 is coupled to the memory unit circuitry 470, which includes data TLB circuitry 472 coupled to data cache circuitry 474 coupled to level 2 (L2) cache circuitry 476. In some examples, the memory access circuitry 464 may include load unit circuitry, store address unit circuitry, and store data unit circuitry, each of which is coupled to the data TLB circuitry 472 in the memory unit circuitry 470. The instruction cache circuitry 434 is further coupled to the level 2 (L2) cache circuitry 476 in the memory unit circuitry 470. In some examples, the instruction cache 434 and the data cache 474 are combined into a single instruction and data cache (not shown) in L2 cache circuitry 476, level 3 (L3) cache circuitry (not shown), and/or main memory. The L2 cache circuitry 476 is coupled to one or more other levels of cache and eventually to a main memory.

The core 490 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 490 includes logic to support a packed data instruction set architecture extension (e.g., AVX1, AVX2), thereby allowing the operations used by many multimedia applications to be performed using packed data.

### Example Systems

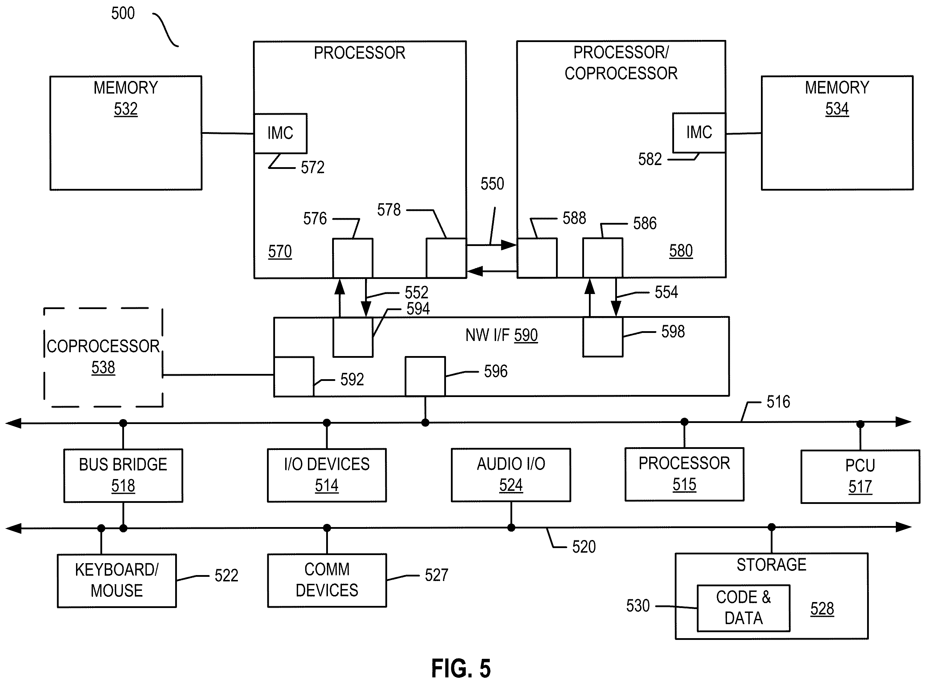

FIG. 5 illustrates an example computing system. Multiprocessor system 500 is an interfaced system and includes a plurality of processors or cores including a first processor 570 and a second processor 580 coupled via an interface 550 such as a point-to-point (P-P) interconnect, a fabric, and/or bus. In some examples, the first processor 570 and the second processor 580 are homogeneous. In some examples, first processor 570 and the second processor 580 are heterogenous. Though the example system 500 is shown to have two processors, the system may have three or more processors, or may be a single processor system. In some examples, the computing system is a system on a chip (SoC).

Processors 570 and 580 are shown including integrated memory controller (IMC) circuitry 572 and 582, respectively. Processor 570 also includes interface circuits 576 and 578; similarly, second processor 580 includes interface circuits 586 and 588. Processors 570, 580 may exchange information via the interface 550 using interface circuits 578, 588. IMCs 572 and 582 couple the processors 570, 580 to respective memories, namely a memory 532 and a memory 534, which may be portions of main memory locally attached to the respective processors.

Processors 570, 580 may each exchange information with a network interface (NW I/F) 590 via individual interfaces 552, 554 using interface circuits 576, 594, 586, 598. The network interface 590 (e.g., one or more of an interconnect, bus, and/or fabric, and in some examples is a chipset) may optionally exchange information with a coprocessor 538 via an interface circuit 592. In some examples, the coprocessor 538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 570, 580 or outside of both processors, yet connected with the processors via an interface such as P-P interconnect, such that either or both processors' local cache information may be stored in the shared cache if a processor is placed into a low power mode.

Network interface 590 may be coupled to a first interface 516 via interface circuit 596. In some examples, first interface 516 may be an interface such as a Peripheral Component Interconnect (PCI) interconnect, a PCI Express interconnect or another I/O interconnect. In some examples, first interface 516 is coupled to a power control unit (PCU) 517, which may include circuitry, software, and/or firmware to perform power management operations with regard to the processors 570, 580 and/or coprocessor 538. PCU 517 provides control information to a voltage regulator (not shown) to cause the voltage regulator to generate the appropriate regulated voltage. PCU 517 also provides control information to control the operating voltage generated. In various examples, PCU 517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 517 is illustrated as being present as logic separate from the processor 570 and/or processor 580. In other cases, PCU 517 may execute on a given one or more of cores (not shown) of processor 570 or 580. In some cases, PCU 517 may be implemented as a microcontroller (dedicated or general-purpose) or other control logic configured to execute its own dedicated power management code, sometimes referred to as P-code. In yet other examples, power management operations to be performed by PCU 517 may be implemented externally to a processor, such as by way of a separate power management integrated circuit (PMIC) or another component external to the processor. In yet other examples, power management operations to be performed by PCU 517 may be implemented within BIOS or other system software.

Various I/O devices 514 may be coupled to first interface 516, along with a bus bridge 518 which couples first interface 516 to a second interface 520. In some examples, one or more additional processor(s) 515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 516. In some examples, second interface 520 may be a low pin count (LPC) interface. Various devices may be coupled to second interface 520 including, for example, a keyboard and/or mouse 522, communication devices 527 and storage circuitry 528. Storage circuitry 528 may be one or more non-transitory machine-readable storage media as described below, such as a disk drive or other mass storage device which may include instructions/code and data 530 and may implement a storage in some examples. Further, an audio I/O 524 may be coupled to second interface 520. Note that other architectures than the point-to-point architecture described above are possible. For example, instead of the point-to-point architecture, a system such as multiprocessor system 500 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

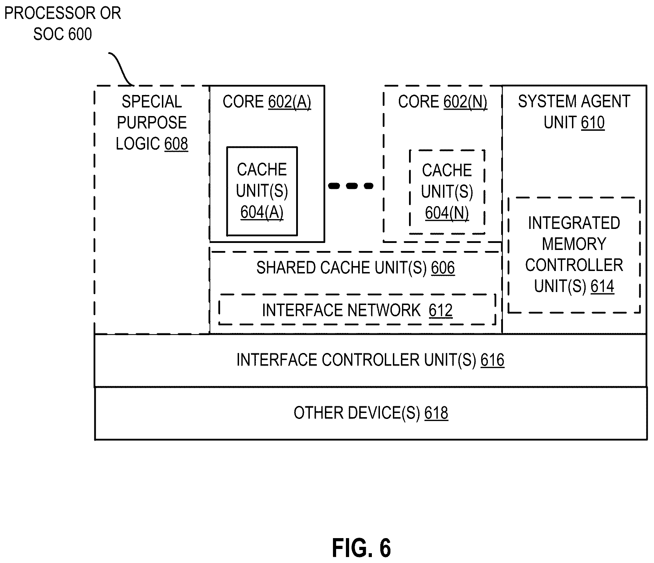

FIG. 6 illustrates a block diagram of an example processor and/or SoC 600 that may have one or more cores and an integrated memory controller. The solid lined boxes illustrate a processor 600 with a single core 602(A), system agent unit circuitry 610, and a set of one or more interface controller unit(s) circuitry 616, while the optional addition of the dashed lined boxes illustrates an alternative processor 600 with multiple cores 602(A)-(N), a set of one or more integrated memory controller unit(s) circuitry 614 in the system agent unit circuitry 610, and special purpose logic 608, as well as a set of one or more interface controller units circuitry 616. Note that the processor 600 may be one of the processors 570 or 580, or coprocessor 538 or 515 of FIG. 5.

Thus, different implementations of the processor 600 may include: 1) a CPU with the special purpose logic 608 being integrated graphics and/or scientific (throughput) logic (which may include one or more cores, not shown), and the cores 602(A)-(N) being one or more general purpose cores (e.g., general purpose in-order cores, general purpose out-of-order cores, or a combination of the two); 2) a coprocessor with the cores 602(A)-(N) being a large number of special purpose cores intended primarily for graphics and/or scientific (throughput); and 3) a coprocessor with the cores 602(A)-(N) being a large number of general purpose in-order cores. Thus, the processor 600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 604(A)-(N) within the cores 602(A)-(N), a set of one or more shared cache unit(s) circuitry 606, and external memory (not shown) coupled to the set of integrated memory controller unit(s) circuitry 614. The set of one or more shared cache unit(s) circuitry 606 may include one or more mid-level caches, such as level 2 (L2), level 3 (L3), level 4 (L4), or other levels of cache, such as a last level cache (LLC), and/or combinations thereof. While in some examples interface network circuitry 612 (e.g., a ring interconnect) interfaces the special purpose logic 608 (e.g., integrated graphics logic), the set of shared cache unit(s) circuitry 606, and the system agent unit circuitry 610, alternative examples use any number of well-known techniques for interfacing such units. In some examples, coherency is maintained between one or more of the shared cache unit(s) circuitry 606 and cores 602(A)-(N). In some examples, interface controller units circuitry 616 couple the cores 602 to one or more other devices 618 such as one or more I/O devices, storage, one or more communication devices (e.g., wireless networking, wired networking, etc.), etc.

In some examples, one or more of the cores 602(A)-(N) are capable of multi-threading. The system agent unit circuitry 610 includes those components coordinating and operating cores 602(A)-(N). The system agent unit circuitry 610 may include, for example, power control unit (PCU) circuitry and/or display unit circuitry (not shown). The PCU may be or may include logic and components needed for regulating the power state of the cores 602(A)-(N) and/or the special purpose logic 608 (e.g., integrated graphics logic). The display unit circuitry is for driving one or more externally connected displays.

The cores 602(A)-(N) may be homogenous in terms of instruction set architecture (ISA). Alternatively, the cores 602(A)-(N) may be heterogeneous in terms of ISA; that is, a subset of the cores 602(A)-(N) may be capable of executing an ISA, while other cores may be capable of executing only a subset of that ISA or another ISA.

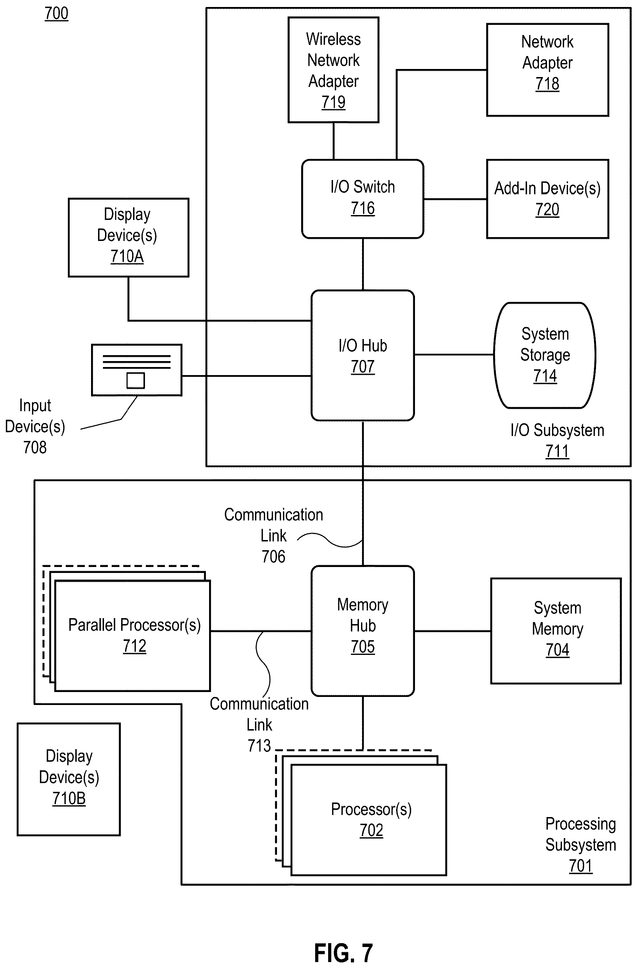

FIG. 7 is a block diagram illustrating a computing system 700 configured to implement one or more aspects of the examples described herein. The computing system 700 includes a processing subsystem 701 having one or more processor(s) 702 and a system memory 704 communicating via an interconnection path that may include a memory hub 705. The memory hub 705 may be a separate component within a chipset component or may be integrated within the one or more processor(s) 702. The memory hub 705 couples with an I/O subsystem 711 via a communication link 706. The I/O subsystem 711 includes an I/O hub 707 that can enable the computing system 700 to receive input from one or more input device(s) 708. Additionally, the I/O hub 707 can enable a display controller, which may be included in the one or more processor(s) 702, to provide outputs to one or more display device(s) 710A. In some examples the one or more display device(s) 710A coupled with the I/O hub 707 can include a local, internal, or embedded display device.

The processing subsystem 701, for example, includes one or more parallel processor(s) 712 coupled to memory hub 705 via a bus or other communication link 713. The communication link 713 may be one of any number of standards-based communication link technologies or protocols, such as, but not limited to PCI Express, or may be a vendor specific communications interface or communications fabric. The one or more parallel processor(s) 712 may form a computationally focused parallel or vector processing system that can include a large number of processing cores and/or processing clusters, such as a many integrated core (MIC) processor. For example, the one or more parallel processor(s) 712 form a graphics processing subsystem that can output pixels to one of the one or more display device(s) 710A coupled via the I/O hub 707. The one or more parallel processor(s) 712 can also include a display controller and display interface (not shown) to enable a direct connection to one or more display device(s) 710B.

Within the I/O subsystem 711, a system storage unit 714 can connect to the I/O hub 707 to provide a storage mechanism for the computing system 700. An I/O switch 716 can be used to provide an interface mechanism to enable connections between the I/O hub 707 and other components, such as a network adapter 718 and/or wireless network adapter 719 that may be integrated into the platform, and various other devices that can be added via one or more add-in device(s) 720. The add-in device(s) 720 may also include, for example, one or more external graphics processor devices, graphics cards, and/or compute accelerators. The network adapter 718 can be an Ethernet adapter or another wired network adapter. The wireless network adapter 719 can include one or more of a Wi-Fi, Bluetooth, near field communication (NFC), or other network device that includes one or more wireless radios.

The computing system 700 can include other components not explicitly shown, including USB or other port connections, optical storage drives, video capture devices, and the like, which may also be connected to the I/O hub 707. Communication paths interconnecting the various components in FIG. 7 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 712 may incorporate circuitry optimized for graphics and video processing, including, for example, video output circuitry, and constitutes a graphics processing unit (GPU). Alternatively or additionally, the one or more parallel processor(s) 712 can incorporate circuitry optimized for general purpose processing, while preserving the underlying computational architecture, described in greater detail herein. Components of the computing system 700 may be integrated with one or more other system elements on a single integrated circuit. For example, the one or more parallel processor(s) 712, memory hub 705, processor(s) 702, and I/O hub 707 can be integrated into a system on chip (SoC) integrated circuit. Alternatively, the components of the computing system 700 can be integrated into a single package to form a system in package (SIP) configuration. In some examples at least a portion of the components of the computing system 700 can be integrated into a multi-chip module (MCM), which can be interconnected with other multi-chip modules into a modular computing system.

It will be appreciated that the computing system 700 shown herein is illustrative and that variations and modifications are possible. The connection topology, including the number and arrangement of bridges, the number of processor(s) 702, and the number of parallel processor(s) 712, may be modified as desired. For instance, system memory 704 can be connected to the processor(s) 702 directly rather than through a bridge, while other devices communicate with system memory 704 via the memory hub 705 and the processor(s) 702. In other alternative topologies, the parallel processor(s) 712 are connected to the I/O hub 707 or directly to one of the one or more processor(s) 702, rather than to the memory hub 705. In other examples, the I/O hub 707 and memory hub 705 may be integrated into a single chip. It is also possible that two or more sets of processor(s) 702 are attached via multiple sockets, which can couple with two or more instances of the parallel processor(s) 712.

Some of the particular components shown herein are optional and may not be included in all implementations of the computing system 700. For example, any number of add-in cards or peripherals may be supported, or some components may be eliminated. Furthermore, some architectures may use different terminology for components similar to those illustrated in FIG. 7. For example, the memory hub 705 may be referred to as a Northbridge in some architectures, while the I/O hub 707 may be referred to as a Southbridge.

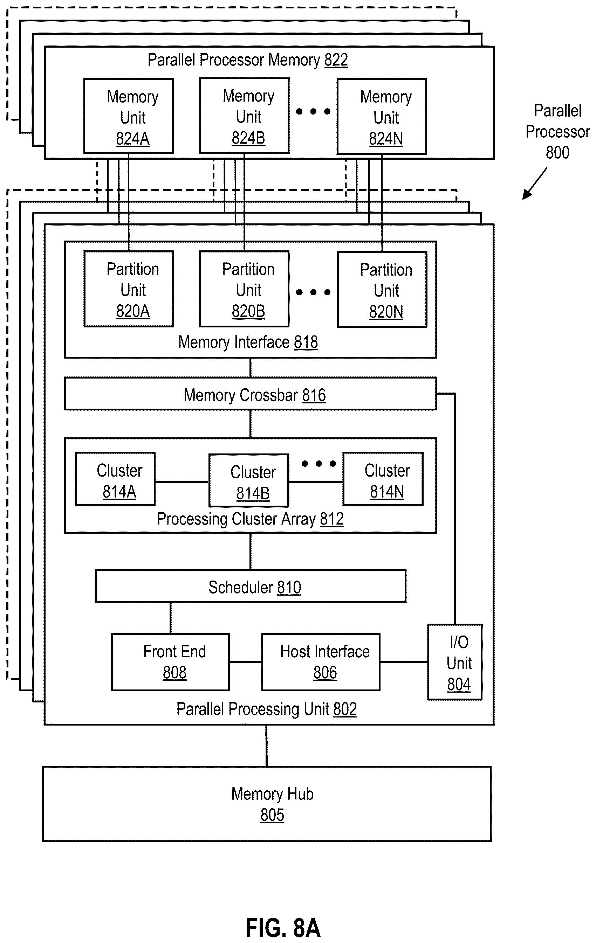

FIG. 8A illustrates examples of a parallel processor 800. The parallel processor 800 may be a GPU, GPGPU or the like as described herein. The various components of the parallel processor 800 may be implemented using one or more integrated circuit devices, such as programmable processors, application specific integrated circuits (ASICs), or field programmable gate arrays (FPGA). The illustrated parallel processor 800 may be one or more of the parallel processor(s) 712 shown in FIG. 7.

The parallel processor 800 includes a parallel processing unit 802. The parallel processing unit includes an I/O unit 804 that enables communication with other devices, including other instances of the parallel processing unit 802. The I/O unit 804 may be directly connected to other devices. For instance, the I/O unit 804 connects with other devices via the use of a hub or switch interface, such as memory hub 805. The connections between the memory hub 805 and the I/O unit 804 form a communication link 713. Within the parallel processing unit 802, the I/O unit 804 connects with a host interface 806 and a memory crossbar 816, where the host interface 806 receives commands directed to performing processing operations and the memory crossbar 816 receives commands directed to performing memory operations.

When the host interface 806 receives a command buffer via the I/O unit 804, the host interface 806 can direct work operations to perform those commands to a front end 808. In some examples the front end 808 couples with a scheduler 810, which is configured to distribute commands or other work items to a processing cluster array 812. The scheduler 810 ensures that the processing cluster array 812 is properly configured and in a valid state before tasks are distributed to the processing clusters of the processing cluster array 812. The scheduler 810 may be implemented via firmware logic executing on a microcontroller. The microcontroller implemented scheduler 810 is configurable to perform complex scheduling and work distribution operations at coarse and fine granularity, enabling rapid preemption and context switching of threads executing on the processing cluster array 812. Preferably, the host software can prove workloads for scheduling on the processing cluster array 812 via one of multiple graphics processing doorbells. In other examples, polling for new workloads or interrupts can be used to identify or indicate availability of work to perform. The workloads can then be automatically distributed across the processing cluster array 812 by the scheduler 810 logic within the scheduler microcontroller.

The processing cluster array 812 can include up to "N" processing clusters (e.g., cluster 814A, cluster 814B, through cluster 814N). Each cluster 814A-814N of the processing cluster array 812 can execute a large number of concurrent threads. The scheduler 810 can allocate work to the clusters 814A-814N of the processing cluster array 812 using various scheduling and/or work distribution algorithms, which may vary depending on the workload arising for each type of program or computation. The scheduling can be handled dynamically by the scheduler 810 or can be assisted in part by compiler logic during compilation of program logic configured for execution by the processing cluster array 812. Optionally, different clusters 814A-814N of the processing cluster array 812 can be allocated for processing different types of programs or for performing different types of computations.

The processing cluster array 812 can be configured to perform various types of parallel processing operations. For example, the processing cluster array 812 is configured to perform general-purpose parallel compute operations. For example, the processing cluster array 812 can include logic to execute processing tasks including filtering of video and/or audio data, performing modeling operations, including physics operations, and performing data transformations.

The processing cluster array 812 is configured to perform parallel graphics processing operations. In such examples in which the parallel processor 800 is configured to perform graphics processing operations, the processing cluster array 812 can include additional logic to support the execution of such graphics processing operations, including, but not limited to texture sampling logic to perform texture operations, as well as tessellation logic and other vertex processing logic. Additionally, the processing cluster array 812 can be configured to execute graphics processing related shader programs such as, but not limited to vertex shaders, tessellation shaders, geometry shaders, and pixel shaders. The parallel processing unit 802 can transfer data from system memory via the I/O unit 804 for processing. During processing the transferred data can be stored to on-chip memory (e.g., parallel processor memory 822) during processing, then written back to system memory.

In examples in which the parallel processing unit 802 is used to perform graphics processing, the scheduler 810 may be configured to divide the processing workload into approximately equal sized tasks, to better enable distribution of the graphics processing operations to multiple clusters 814A-814N of the processing cluster array 812. In some of these examples, portions of the processing cluster array 812 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 814A-814N may be stored in buffers to allow the intermediate data to be transmitted between clusters 814A-814N for further processing.

During operation, the processing cluster array 812 can receive processing tasks to be executed via the scheduler 810, which receives commands defining processing tasks from front end 808. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 810 may be configured to fetch the indices corresponding to the tasks or may receive the indices from the front end 808. The front end 808 can be configured to ensure the processing cluster array 812 is configured to a valid state before the workload specified by incoming command buffers (e.g., batch-buffers, push buffers, etc.) is initiated.

Each of the one or more instances of the parallel processing unit 802 can couple with parallel processor memory 822. The parallel processor memory 822 can be accessed via the memory crossbar 816, which can receive memory requests from the processing cluster array 812 as well as the I/O unit 804. The memory crossbar 816 can access the parallel processor memory 822 via a memory interface 818. The memory interface 818 can include multiple partition units (e.g., partition unit 820A, partition unit 820B, through partition unit 820N) that can each couple to a portion (e.g., memory unit) of parallel processor memory 822. The number of partition units 820A-820N may be configured to be equal to the number of memory units, such that a first partition unit 820A has a corresponding first memory unit 824A, a second partition unit 820B has a corresponding second memory unit 824B, and an Nth partition unit 820N has a corresponding Nth memory unit 824N. In other examples, the number of partition units 820A-820N may not be equal to the number of memory devices.

The memory units 824A-824N can include various types of memory devices, including dynamic random-access memory (DRAM) or graphics random access memory, such as synchronous graphics random access memory (SGRAM), including graphics double data rate (GDDR) memory. Optionally, the memory units 824A-824N may also include 3D stacked memory, including but not limited to high bandwidth memory (HBM). Persons skilled in the art will appreciate that the specific implementation of the memory units 824A-824N can vary and can be selected from one of various conventional designs. Render targets, such as frame buffers or texture maps may be stored across the memory units 824A-824N, allowing partition units 820A-820N to write portions of each render target in parallel to efficiently use the available bandwidth of parallel processor memory 822. In some examples, a local instance of the parallel processor memory 822 may be excluded in favor of a unified memory design that utilizes system memory in conjunction with local cache memory.

Optionally, any one of the clusters 814A-814N of the processing cluster array 812 has the ability to process data that will be written to any of the memory units 824A-824N within parallel processor memory 822. The memory crossbar 816 can be configured to transfer the output of each cluster 814A-814N to any partition unit 820A-820N or to another cluster 814A-814N, which can perform additional processing operations on the output. Each cluster 814A-814N can communicate with the memory interface 818 through the memory crossbar 816 to read from or write to various external memory devices. In one of the examples with the memory crossbar 816 the memory crossbar 816 has a connection to the memory interface 818 to communicate with the I/O unit 804, as well as a connection to a local instance of the parallel processor memory 822, enabling the processing units within the different processing clusters 814A-814N to communicate with system memory or other memory that is not local to the parallel processing unit 802. Generally, the memory crossbar 816 may, for example, be able to use virtual channels to separate traffic streams between the clusters 814A-814N and the partition units 820A-820N.

While a single instance of the parallel processing unit 802 is illustrated within the parallel processor 800, any number of instances of the parallel processing unit 802 can be included. For example, multiple instances of the parallel processing unit 802 can be provided on a single add-in card, or multiple add-in cards can be interconnected. For example, the parallel processor 800 can be an add-in device, such as add-in device 720 of FIG. 7, which may be a graphics card such as a discrete graphics card that includes one or more GPUs, one or more memory devices, and device-to-device or network or fabric interfaces. The different instances of the parallel processing unit 802 can be configured to inter-operate even if the different instances have different numbers of processing cores, different amounts of local parallel processor memory, and/or other configuration differences. Optionally, some instances of the parallel processing unit 802 can include higher precision floating point units relative to other instances. Systems incorporating one or more instances of the parallel processing unit 802 or the parallel processor 800 can be implemented in a variety of configurations and form factors, including but not limited to desktop, laptop, handheld personal computers, servers, workstations, game consoles, Internet of Things (IoT) devices, automotive devices, and/or embedded systems (e.g., microcontrollers). An orchestrator can form composite nodes for workload performance using one or more of: disaggregated processor resources, cache resources, memory resources, storage resources, and networking resources.

In some examples, the parallel processing unit 802 can be partitioned into multiple instances. Those multiple instances can be configured to execute workloads associated with different clients in an isolated manner, enabling a pre-determined quality of service to be provided for each client. For example, each cluster 814A-814N can be compartmentalized and isolated from other clusters, allowing the processing cluster array 812 to be divided into multiple compute partitions or instances. In such configuration, workloads that execute on an isolated partition are protected from faults or errors associated with a different workload that executes on a different partition. The partition units 820A-820N can be configured to enable a dedicated and/or isolated path to memory for the clusters 814A-814N associated with the respective compute partitions. This datapath isolation enables the compute resources within a partition can communicate with one or more assigned memory units 824A-824N without being subjected to inference by the activities of other partitions.

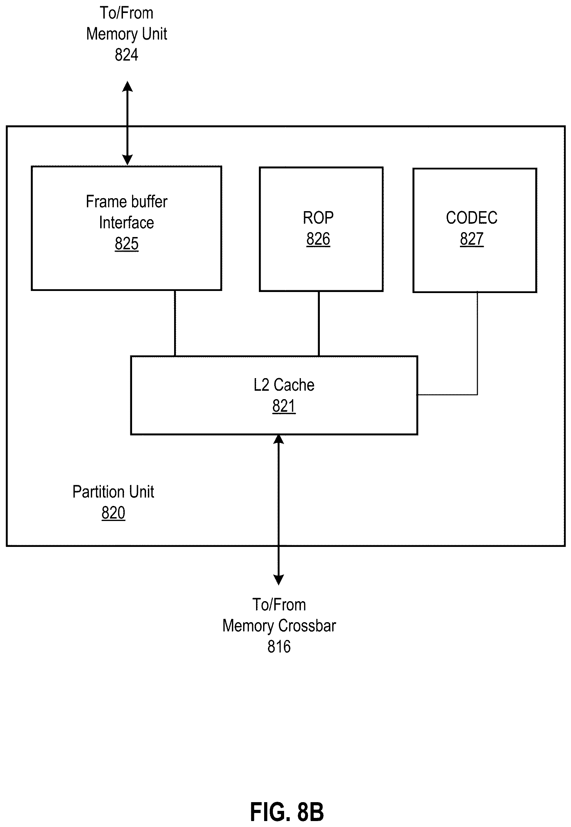

FIG. 8B is a block diagram of a partition unit 820. The partition unit 820 may be an instance of one of the partition units 820A-820N of FIG. 8A. As illustrated, the partition unit 820 includes an L2 cache 821, a frame buffer interface 825, and a ROP 826 (raster operations unit). The L2 cache 821 is a read/write cache that is configured to perform load and store operations received from the memory crossbar 816 and ROP 826. Read misses and urgent write-back requests are output by L2 cache 821 to frame buffer interface 825 for processing. Updates can also be sent to the frame buffer via the frame buffer interface 825 for processing. In some examples the frame buffer interface 825 interfaces with one of the memory units 824 in parallel processor memory, such as the memory units 824A-824N of FIG. 8A (e.g., within parallel processor memory 822). The partition unit 820 may additionally or alternatively also interface with one of the memory units in parallel processor memory via a memory controller (not shown).

In graphics applications, the ROP 826 is a processing unit that performs raster operations such as stencil, z test, blending, and the like. The ROP 826 then outputs processed graphics data that is stored in graphics memory. In some examples the ROP 826 includes or couples with a CODEC 827 that includes compression logic to compress depth or color data that is written to memory or the L2 cache 821 and decompress depth or color data that is read from memory or the L2 cache 821. The compression logic can be lossless compression logic that makes use of one or more of multiple compression algorithms. The type of compression that is performed by the CODEC 827 can vary based on the statistical characteristics of the data to be compressed. For example, in some examples, delta color compression is performed on depth and color data on a per-tile basis. In some examples the CODEC 827 includes compression and decompression logic that can compress and decompress compute data associated with machine learning operations. The CODEC 827 can, for example, compress sparse matrix data for sparse machine learning operations. The CODEC 827 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 826 may be included within each processing cluster (e.g., cluster 814A-814N of FIG. 8A) instead of within the partition unit 820. In such example, read and write requests for pixel data are transmitted over the memory crossbar 816 instead of pixel fragment data. The processed graphics data may be displayed on a display device, such as one of the one or more display device(s) 710A-710B of FIG. 7, routed for further processing by the processor(s) 702, or routed for further processing by one of the processing entities within the parallel processor 800 of FIG. 8A.

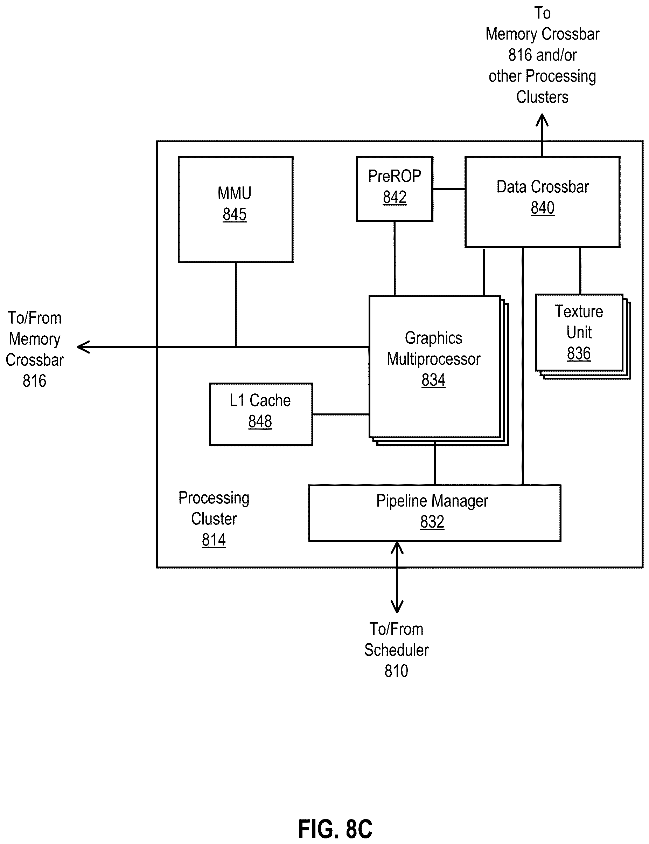

FIG. 8C is a block diagram of a processing cluster 814 within a parallel processing unit. For example, the processing cluster is an instance of one of the processing clusters 814A-814N of FIG. 8A. The processing cluster 814 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 814 can be controlled via a pipeline manager 832 that distributes processing tasks to SIMT parallel processors. The pipeline manager 832 receives instructions from the scheduler 810 of FIG. 8A and manages execution of those instructions via a graphics multiprocessor 834 and/or a texture unit 836. The illustrated graphics multiprocessor 834 is an exemplary instance of a SIMT parallel processor. However, various types of SIMT parallel processors of differing architectures may be included within the processing cluster 814. One or more instances of the graphics multiprocessor 834 can be included within a processing cluster 814. The graphics multiprocessor 834 can process data and a data crossbar 840 can be used to distribute the processed data to one of multiple possible destinations, including other shader units. The pipeline manager 832 can facilitate the distribution of processed data by specifying destinations for processed data to be distributed via the data crossbar 840.

Each graphics multiprocessor 834 within the processing cluster 814 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 814 constitute a thread. A set of threads executing across the set of parallel processing engines is a thread group. A thread group executes the same program on different input data. Each thread within a thread group can be assigned to a different processing engine within a graphics multiprocessor 834. A thread group may include fewer threads than the number of processing engines within the graphics multiprocessor 834. When a thread group includes fewer threads than the number of processing engines, one or more of the processing engines may be idle during cycles in which that thread group is being processed. A thread group may also include more threads than the number of processing engines within the graphics multiprocessor 834. When the thread group includes more threads than the number of processing engines within the graphics multiprocessor 834, processing can be performed over consecutive clock cycles. Optionally, multiple thread groups can be executed concurrently on the graphics multiprocessor 834.

The graphics multiprocessor 834 may include an internal cache memory to perform load and store operations. Optionally, the graphics multiprocessor 834 can forego an internal cache and use a cache memory (e.g., level 1 (L1) cache 848) within the processing cluster 814. Each graphics multiprocessor 834 also has access to level 2 (L2) caches within the partition units (e.g., partition units 820A-820N of FIG. 8A) that are shared among all processing clusters 814 and may be used to transfer data between threads. The graphics multiprocessor 834 may also access off-chip global memory, which can include one or more of local parallel processor memory and/or system memory. Any memory external to the parallel processing unit 802 may be used as global memory. Embodiments in which the processing cluster 814 includes multiple instances of the graphics multiprocessor 834 can share common instructions and data, which may be stored in the L1 cache 848.

Each processing cluster 814 may include an MMU 845 (memory management unit) that is configured to map virtual addresses into physical addresses. In other examples, one or more instances of the MMU 845 may reside within the memory interface 818 of FIG. 8A. The MMU 845 includes a set of page table entries (PTEs) used to map a virtual address to a physical address of a tile and optionally a cache line index. The MMU 845 may include address translation lookaside buffers (TLB) or caches that may reside within the graphics multiprocessor 834 or the L1 cache 848 of processing cluster 814. The physical address is processed to distribute surface data access locality to allow efficient request interleaving among partition units. The cache line index may be used to determine whether a request for a cache line is a hit or miss.

In graphics and computing applications, a processing cluster 814 may be configured such that each graphics multiprocessor 834 is coupled to a texture unit 836 for performing texture mapping operations, e.g., determining texture sample positions, reading texture data, and filtering the texture data. Texture data is read from an internal texture L1 cache (not shown) or in some examples from the L1 cache within graphics multiprocessor 834 and is fetched from an L2 cache, local parallel processor memory, or system memory, as needed. Each graphics multiprocessor 834 outputs processed tasks to the data crossbar 840 to provide the processed task to another processing cluster 814 for further processing or to store the processed task in an L2 cache, local parallel processor memory, or system memory via the memory crossbar 816. A preROP 842 (pre-raster operations unit) is configured to receive data from graphics multiprocessor 834, direct data to ROP units, which may be located with partition units as described herein (e.g., partition units 820A-820N of FIG. 8A). The preROP 842 unit can perform optimizations for color blending, organize pixel color data, and perform address translations.

It will be appreciated that the core architecture described herein is illustrative and that variations and modifications are possible. Any number of processing units, e.g., graphics multiprocessor 834, texture units 836, preROPs 842, etc., may be included within a processing cluster 814. Further, while only one processing cluster 814 is shown, a parallel processing unit as described herein may include any number of instances of the processing cluster 814. Optionally, each processing cluster 814 can be configured to operate independently of other processing clusters 814 using separate and distinct processing units, L1 caches, L2 caches, etc.

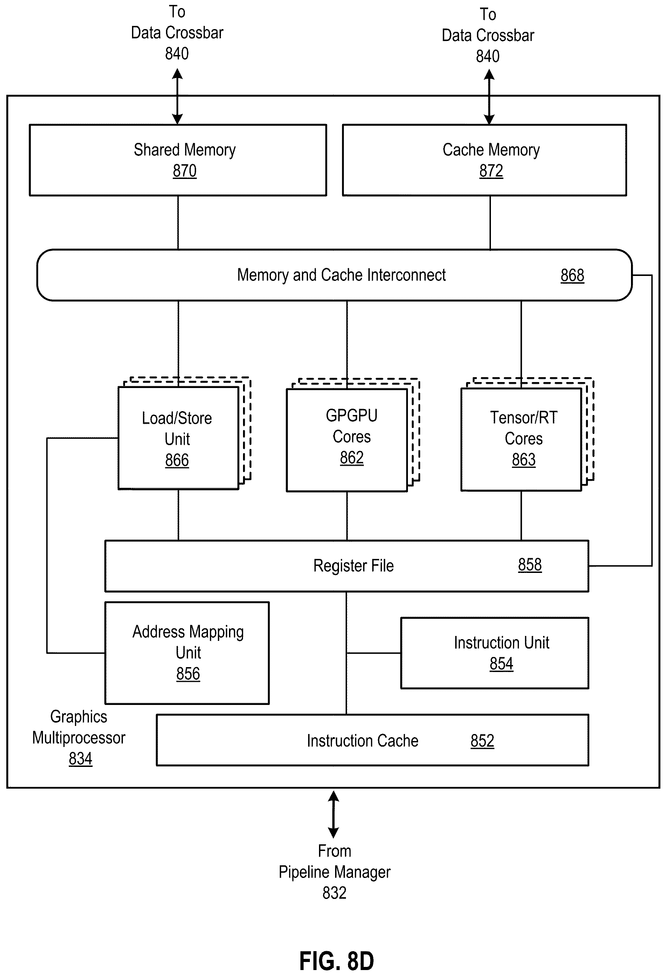

FIG. 8D shows an example of the graphics multiprocessor 834 in which the graphics multiprocessor 834 couples with the pipeline manager 832 of the processing cluster 814. The graphics multiprocessor 834 has an execution pipeline including but not limited to an instruction cache 852, an instruction unit 854, an address mapping unit 856, a register file 858, one or more general purpose graphics processing unit (GPGPU) cores 862, and one or more load/store units 866. The GPGPU cores 862 and load/store units 866 are coupled with cache memory 872 and shared memory 870 via a memory and cache interconnect 868. The graphics multiprocessor 834 may additionally include tensor and/or ray-tracing cores 863 that include hardware logic to accelerate matrix and/or ray-tracing operations.

The instruction cache 852 may receive a stream of instructions to execute from the pipeline manager 832. The instructions are cached in the instruction cache 852 and dispatched for execution by the instruction unit 854. The instruction unit 854 can dispatch instructions as thread groups (e.g., warps), with each thread of the thread group assigned to a different execution unit within GPGPU core 862. An instruction can access any of a local, shared, or global address space by specifying an address within a unified address space. The address mapping unit 856 can be used to translate addresses in the unified address space into a distinct memory address that can be accessed by the load/store units 866.

The register file 858 provides a set of registers for the functional units of the graphics multiprocessor 834. The register file 858 provides temporary storage for operands connected to the data paths of the functional units (e.g., GPGPU cores 862, load/store units 866) of the graphics multiprocessor 834. The register file 858 may be divided between each of the functional units such that each functional unit is allocated a dedicated portion of the register file 858. For example, the register file 858 may be divided between the different warps being executed by the graphics multiprocessor 834.

The GPGPU cores 862 can each include floating point units (FPUs) and/or integer arithmetic logic units (ALUs) that are used to execute instructions of the graphics multiprocessor 834. In some implementations, the GPGPU cores 862 can include hardware logic that may otherwise reside within the tensor and/or ray-tracing cores 863. The GPGPU cores 862 can be similar in architecture or can differ in architecture. For example and in some examples, a first portion of the GPGPU cores 862 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 834 can additionally include one or more fixed function or special function units to perform specific functions such as copy rectangle or pixel blending operations. One or more of the GPGPU cores can also include fixed or special function logic.

The GPGPU cores 862 may include SIMD logic capable of performing a single instruction on multiple sets of data. Optionally, GPGPU cores 862 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 868 is an interconnect network that connects each of the functional units of the graphics multiprocessor 834 to the register file 858 and to the shared memory 870. For example, the memory and cache interconnect 868 is a crossbar interconnect that allows the load/store unit 866 to implement load and store operations between the shared memory 870 and the register file 858. The register file 858 can operate at the same frequency as the GPGPU cores 862, thus data transfer between the GPGPU cores 862 and the register file 858 is very low latency. The shared memory 870 can be used to enable communication between threads that execute on the functional units within the graphics multiprocessor 834. The cache memory 872 can be used as a data cache for example, to cache texture data communicated between the functional units and the texture unit 836. The shared memory 870 can also be used as a program managed cached. The shared memory 870 and the cache memory 872 can couple with the data crossbar 840 to enable communication with other components of the processing cluster. Threads executing on the GPGPU cores 862 can programmatically store data within the shared memory in addition to the automatically cached data that is stored within the cache memory 872.

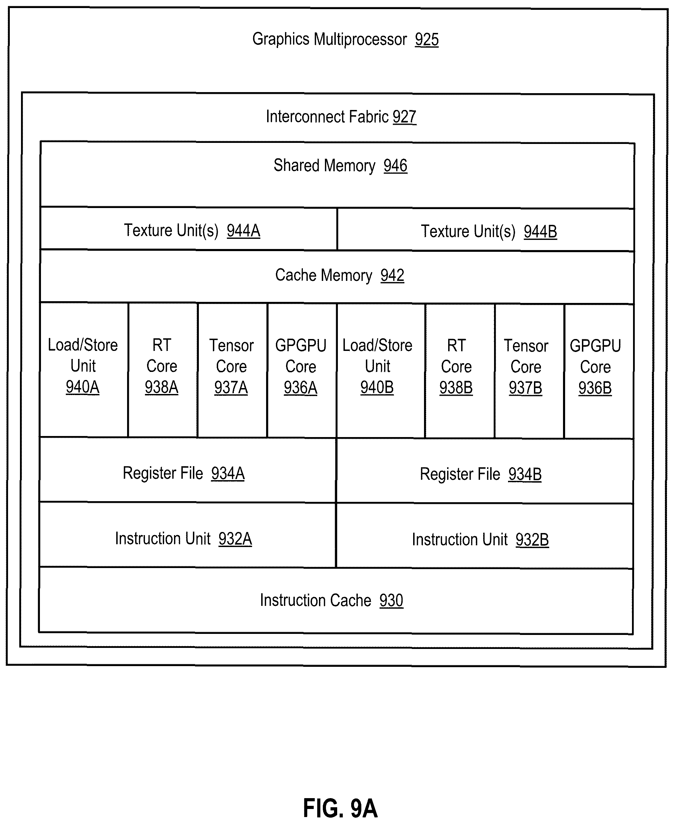

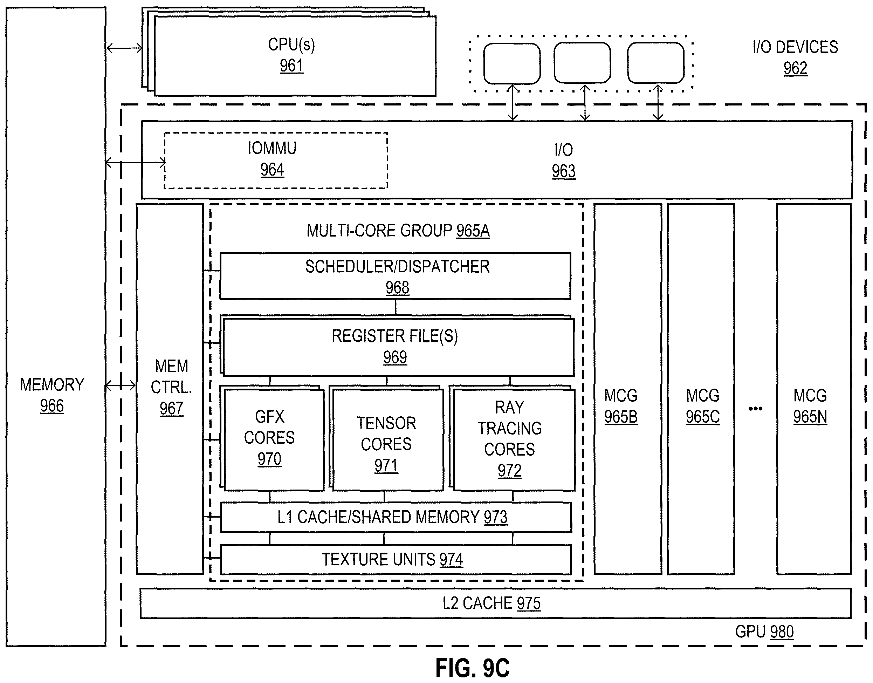

FIGS. 9A-9C illustrate additional graphics multiprocessors, according to examples. FIGS. 9A-9B illustrate graphics multiprocessors 925, 950, which are related to the graphics multiprocessor 834 of FIG. 8C and may be used in place of one of those. Therefore, the disclosure of any features in combination with the graphics multiprocessor 834 herein also discloses a corresponding combination with the graphics multiprocessor(s) 925, 950, but is not limited to such. FIG. 9C illustrates a graphics processing unit (GPU) 980 which includes dedicated sets of graphics processing resources arranged into multi-core groups 965A-965N, which correspond to the graphics multiprocessors 925, 950. The illustrated graphics multiprocessors 925, 950 and the multi-core groups 965A-965N can be streaming multiprocessors (SM) capable of simultaneous execution of a large number of execution threads.

The graphics multiprocessor 925 of FIG. 9A includes multiple additional instances of execution resource units relative to the graphics multiprocessor 834 of FIG. 8D. For example, the graphics multiprocessor 925 can include multiple instances of the instruction unit 932A-932B, register file 934A-934B, and texture unit(s) 944A-944B. The graphics multiprocessor 925 also includes multiple sets of graphics or compute execution units (e.g., GPGPU core 936A-936B, tensor core 937A-937B, ray-tracing core 938A-938B) and multiple sets of load/store units 940A-940B. The execution resource units have a common instruction cache 930, texture and/or data cache memory 942, and shared memory 946.

The various components can communicate via an interconnect fabric 927. The interconnect fabric 927 may include one or more crossbar switches to enable communication between the various components of the graphics multiprocessor 925. The interconnect fabric 927 may be a separate, high-speed network fabric layer upon which each component of the graphics multiprocessor 925 is stacked. The components of the graphics multiprocessor 925 communicate with remote components via the interconnect fabric 927. For example, the cores 936A-936B, 937A-937B, and 938A-938B can each communicate with shared memory 946 via the interconnect fabric 927. The interconnect fabric 927 can arbitrate communication within the graphics multiprocessor 925 to ensure a fair bandwidth allocation between components.

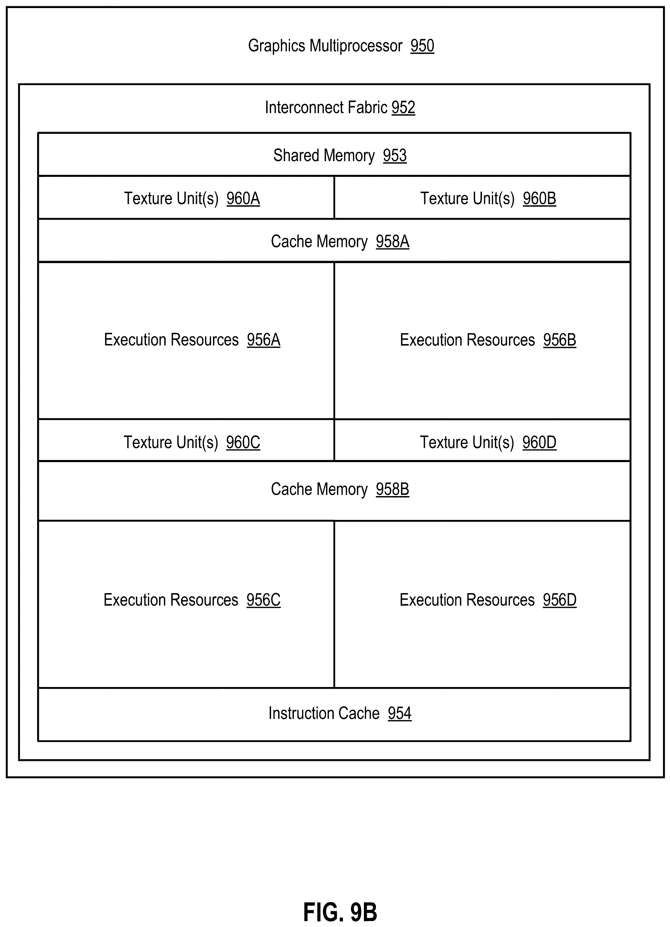

The graphics multiprocessor 950 of FIG. 9B includes multiple sets of execution resources 956A-956D, where each set of execution resource includes multiple instruction units, register files, GPGPU cores, and load store units, as illustrated in FIG. 8D and FIG. 9A. The execution resources 956A-956D can work in concert with texture unit(s) 960A-960D for texture operations, while sharing an instruction cache 954, and shared memory 953. For example, the execution resources 956A-956D can share an instruction cache 954 and shared memory 953, as well as multiple instances of a texture and/or data cache memory 958A-958B. The various components can communicate via an interconnect fabric 952 similar to the interconnect fabric 927 of FIG. 9A.

Persons skilled in the art will understand that the architecture described in FIGS. 1, 8A-8D, and 9A-9B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 802 of FIG. 8A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 9C illustrates a graphics processing unit (GPU) 980 which includes dedicated sets of graphics processing resources arranged into multi-core groups 965A-965N. While the details of only a single multi-core group 965A are provided, it will be appreciated that the other multi-core groups 965B-965N may be equipped with the same or similar sets of graphics processing resources. Details described with respect to the multi-core groups 965A-965N may also apply to any graphics multiprocessor 834, 925, 950 described herein.

As illustrated, a multi-core group 965A may include a set of graphics cores 970, a set of tensor cores 971, and a set of ray tracing cores 972. A scheduler/dispatcher 968 schedules and dispatches the graphics threads for execution on the various cores 970, 971, 972. A set of register files 969 store operand values used by the cores 970, 971, 972 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 973 store graphics data such as texture data, vertex data, pixel data, ray data, bounding volume data, etc., locally within each multi-core group 965A. One or more texture units 974 can also be used to perform texturing operations, such as texture mapping and sampling. A Level 2 (L2) cache 975 shared by all or a subset of the multi-core groups 965A-965N stores graphics data and/or instructions for multiple concurrent graphics threads. As illustrated, the L2 cache 975 may be shared across a plurality of multi-core groups 965A-965N. One or more memory controllers 967 couple the GPU 980 to a memory 966 which may be a system memory (e.g., DRAM) and/or a dedicated graphics memory (e.g., GDDR6 memory).

Input/output (I/O) circuitry 963 couples the GPU 980 to one or more I/O devices 962 such as digital signal processors (DSPs), network controllers, or user input devices. An on-chip interconnect may be used to couple the I/O devices 962 to the GPU 980 and memory 966. One or more I/O memory management units (IOMMUs) 964 of the I/O circuitry 963 couple the I/O devices 962 directly to the system memory 966. Optionally, the IOMMU 964 manages multiple sets of page tables to map virtual addresses to physical addresses in system memory 966. The I/O devices 962, CPU(s) 961, and GPU(s) 980 may then share the same virtual address space.

In one implementation of the IOMMU 964, the IOMMU 964 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 966). The base addresses of each of the first and second sets of page tables may be stored in control registers and swapped out on a context switch (e.g., so that the new context is provided with access to the relevant set of page tables). While not illustrated in FIG. 9C, each of the cores 970, 971, 972 and/or multi-core groups 965A-965N may include translation lookaside buffers (TLBs) to cache guest virtual to guest physical translations, guest physical to host physical translations, and guest virtual to host physical translations.

The CPU(s) 961, GPUs 980, and I/O devices 962 may be integrated on a single semiconductor chip and/or chip package. The illustrated memory 966 may be integrated on the same chip or may be coupled to the memory controllers 967 via an off-chip interface. In one implementation, the memory 966 comprises GDDR6 memory which shares the same virtual address space as other physical system-level memories, although the underlying principles described herein are not limited to this specific implementation.

The tensor cores 971 may include a plurality of execution units specifically designed to perform matrix operations, which are the fundamental compute operation used to perform deep learning operations. For example, simultaneous matrix multiplication operations may be used for neural network training and inferencing. The tensor cores 971 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 971. The training of neural networks, in particular, requires a significant number of matrix dot product operations. In order to process an inner-product formulation of an N x N x N matrix multiply, the tensor cores 971 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 971 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 971 support a sparse mode of operation for matrices in which the vast majority of values are zero. The tensor cores 971 include support for sparse input matrices that are encoded in a sparse matrix representation (e.g., coordinate list encoding (COO), compressed sparse row (CSR), compress sparse column (CSC), etc.). The tensor cores 971 also include support for compressed sparse matrix representations in the event that the sparse matrix representation may be further compressed. Compressed, encoded, and/or compressed and encoded matrix data, along with associated compression and/or encoding metadata, can be read by the tensor cores 971 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 971, output matrix C may be output in a compressed format, a sparse encoding, or a compressed sparse encoding.

The ray tracing cores 972 may accelerate ray tracing operations for both real-time ray tracing and non-real-time ray tracing implementations. In particular, the ray tracing cores 972 may include ray traversal/intersection circuitry for performing ray traversal using bounding volume hierarchies (BVHs) and identifying intersections between rays and primitives enclosed within the BVH volumes. The ray tracing cores 972 may also include circuitry for performing depth testing and culling (e.g., using a Z buffer or similar arrangement). In one implementation, the ray tracing cores 972 perform traversal and intersection operations in concert with the image denoising techniques described herein, at least a portion of which may be executed on the tensor cores 971. For example, the tensor cores 971 may implement a deep learning neural network to perform denoising of frames generated by the ray tracing cores 972. However, the CPU(s) 961, graphics cores 970, and/or ray tracing cores 972 may also implement all or a portion of the denoising and/or deep learning algorithms.

In addition, as described above, a distributed approach to denoising may be employed in which the GPU 980 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 972 may process all BVH traversal and/or ray-primitive intersections, saving the graphics cores 970 from being overloaded with thousands of instructions per ray. For example, each ray tracing core 972 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 965A can simply launch a ray probe, and the ray tracing cores 972 independently perform ray traversal and intersection and return hit data (e.g., a hit, no hit, multiple hits, etc.) to the thread context. The other cores 970, 971 are freed to perform other graphics or compute work while the ray tracing cores 972 perform the traversal and intersection operations.

Optionally, each ray tracing core 972 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 970 and tensor cores 971) are freed to perform other forms of graphics work.

In some examples described below, a hybrid rasterization/ray tracing approach is used in which work is distributed between the graphics cores 970 and ray tracing cores 972.

The ray tracing cores 972 (and/or other cores 970, 971) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 972, graphics cores 970 and tensor cores 971 is Vulkan API (e.g., Vulkan version 1.1.85 and later). Note, however, that the underlying principles described herein are not limited to any particular ray tracing ISA.

In general, the various cores 972, 971, 970 may support a ray tracing instruction set that includes instructions/functions for one or more of ray generation, closest hit, any hit, ray-primitive intersection, per-primitive and hierarchical bounding box construction, miss, visit, and exceptions. More specifically, some examples include ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 972 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 972 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 972 can also be used to perform computations that are not directly analogous to ray tracing. For example, mesh projection, mesh refinement, and volume sampling computations can be accelerated using the ray tracing cores 972. Generic coordinate space calculations, such as nearest neighbor calculations can also be performed. For example, the set of points near a given point can be discovered by defining a bounding box in the coordinate space around the point. BVH and ray probe logic within the ray tracing cores 972 can then be used to determine the set of point intersections within the bounding box. The intersections constitute the origin point and the nearest neighbors to that origin point. Computations that are performed using the ray tracing cores 972 can be performed in parallel with computations performed on the graphics cores 972 and tensor cores 971. A shader compiler can be configured to compile a compute shader or other general-purpose graphics processing program into low level primitives that can be parallelized across the graphics cores 970, tensor cores 971, and ray tracing cores 972.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

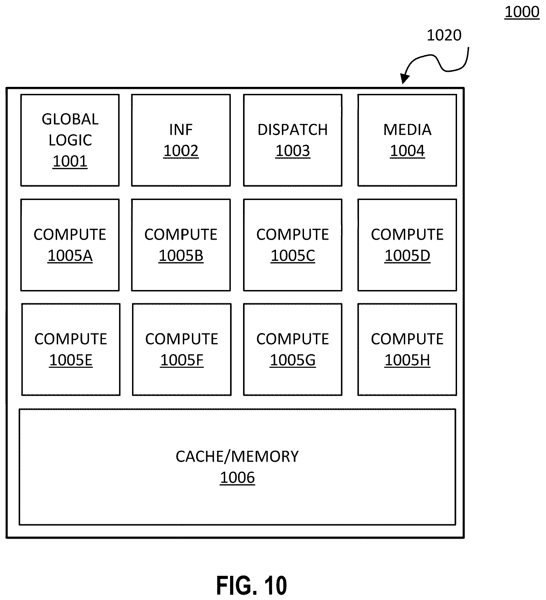

FIG. 10 shows a parallel compute system 1000, according to some examples. In some examples the parallel compute system 1000 includes a parallel processor 1020, which can be a graphics processor or compute accelerator as described herein. The parallel processor 1020 includes a global logic unit 1001, an interface 1002, a thread dispatcher 1003, a media unit 1004, a set of compute units 1005A-1005H, and a cache/memory units 1006. The global logic unit 1001, in some examples, includes global functionality for the parallel processor 1020, including device configuration registers, global schedulers, power management logic, and the like. The interface 1002 can include a front-end interface for the parallel processor 1020. The thread dispatcher 1003 can receive workloads from the interface 1002 and dispatch threads for the workload to the compute units 1005A-1005H. If the workload includes any media operations, at least a portion of those operations can be performed by the media unit 1004. The media unit can also offload some operations to the compute units 1005A-1005H. The cache/memory units 1006 can include cache memory (e.g., L3 cache) and local memory (e.g., HBM, GDDR) for the parallel processor 1020.

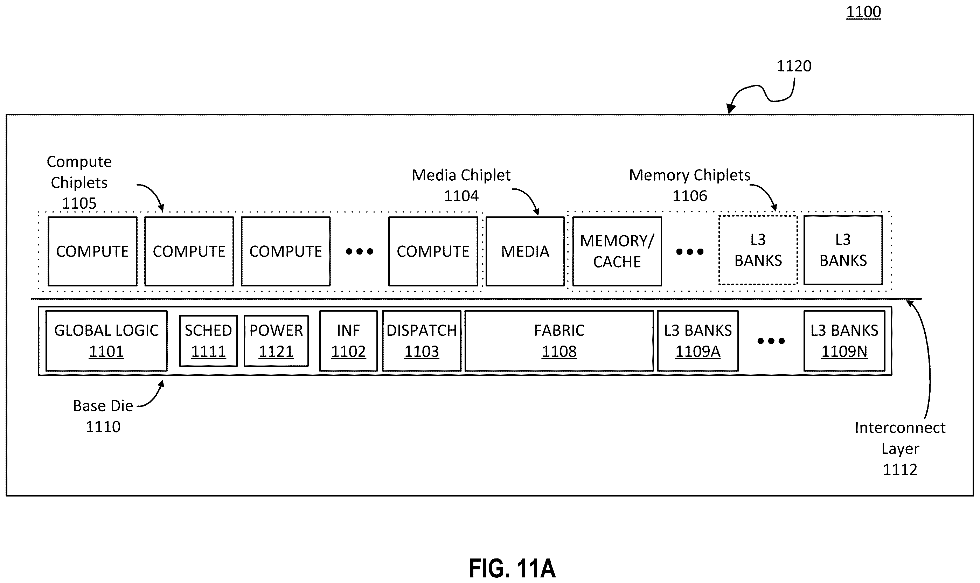

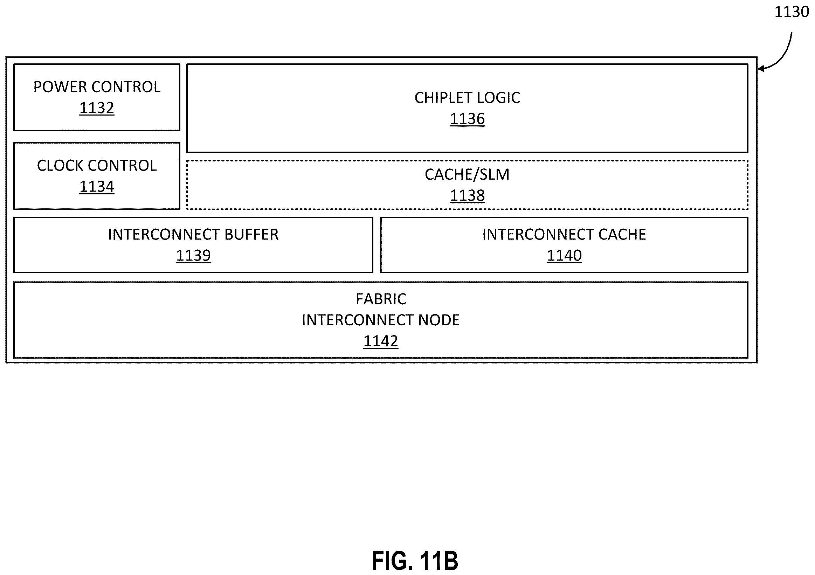

FIGS. 11A-11B illustrate a hybrid logical/physical view of a disaggregated parallel processor, according to examples described herein. FIG. 11A illustrates a disaggregated parallel compute system 1100. FIG. 11B illustrates a chiplet 1130 of the disaggregated parallel compute system 1100.

As shown in FIG. 11A, a disaggregated compute system 1100 can include a parallel processor 1120 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1105, a media chiplet 1104, and memory chiplets 1106. Each chiplet can be separately manufactured using different process technologies. For example, compute chiplets 1105 may be manufactured using the smallest or most advanced process technology available at the time of fabrication, while memory chiplets 1106 or other chiplets (e.g., I/O, networking, etc.) may be manufactured using a larger or less advanced process technologies.

The various chiplets can be bonded to a base die 1110 and configured to communicate with each other and logic within the base die 1110 via an interconnect layer 1112. In some examples, the base die 1110 can include global logic 1101, which can include scheduler 1111 and power management 1121 logic units, an interface 1102, a dispatch unit 1103, and an interconnect fabric module 1108 coupled with or integrated with one or more L3 cache banks 1109A-1109N. The interconnect fabric 1108 can be an inter-chiplet fabric that is integrated into the base die 1110. Logic chiplets can use the fabric 1108 to relay messages between the various chiplets. Additionally, L3 cache banks 1109A-1109N in the base die and/or L3 cache banks within the memory chiplets 1106 can cache data read from and transmitted to DRAM chiplets within the memory chiplets 1106 and to system memory of a host.

In some examples the global logic 1101 is a microcontroller that can execute firmware to perform scheduler 1111 and power management 1121 functionality for the parallel processor 1120. The microcontroller that executes the global logic can be tailored for the target use case of the parallel processor 1120. The scheduler 1111 can perform global scheduling operations for the parallel processor 1120. The power management 1121 functionality can be used to enable or disable individual chiplets within the parallel processor when those chiplets are not in use.

The various chiplets of the parallel processor 1120 can be designed to perform specific functionality that, in existing designs, would be integrated into a single die. A set of compute chiplets 1105 can include clusters of compute units (e.g., execution units, streaming multiprocessors, etc.) that include programmable logic to execute compute or graphics shader instructions. A media chiplet 1104 can include hardware logic to accelerate media encode and decode operations. Memory chiplets 1106 can include volatile memory (e.g., DRAM) and one or more SRAM cache memory banks (e.g., L3 banks).

As shown in FIG. 11B, each chiplet 1130 can include common components and application specific components. Chiplet logic 1136 within the chiplet 1130 can include the specific components of the chiplet, such as an array of streaming multiprocessors, compute units, or execution units described herein. The chiplet logic 1136 can couple with an optional cache or shared local memory 1138 or can include a cache or shared local memory within the chiplet logic 1136. The chiplet 1130 can include a fabric interconnect node 1142 that receives commands via the inter-chiplet fabric. Commands and data received via the fabric interconnect node 1142 can be stored temporarily within an interconnect buffer 1139. Data transmitted to and received from the fabric interconnect node 1142 can be stored in an interconnect cache 1140. Power control 1132 and clock control 1134 logic can also be included within the chiplet. The power control 1132 and clock control 1134 logic can receive configuration commands via the fabric can configure dynamic voltage and frequency scaling for the chiplet 1130. In some examples, each chiplet can have an independent clock domain and power domain and can be clock gated and power gated independently of other chiplets.

At least a portion of the components within the illustrated chiplet 1130 can also be included within logic embedded within the base die 1110 of FIG. 11A. For example, logic within the base die that communicates with the fabric can include a version of the fabric interconnect node 1142. Base die logic that can be independently clock or power gated can include a version of the power control 1132 and/or clock control 1134 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Graphics Pipeline

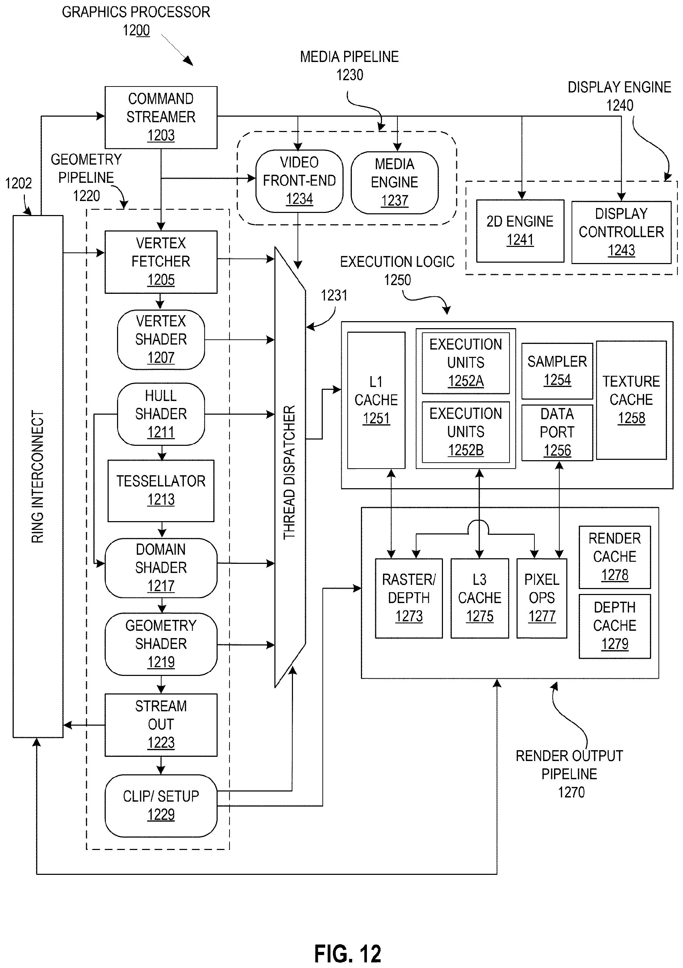

FIG. 12 is a block diagram of another example of a graphics processor 1200. Elements of FIG. 12 having the same reference numbers (or names) as the elements of any other figure herein can operate or function in any manner similar to that described elsewhere herein, but are not limited to such.

In some examples, graphics processor 1200 includes a geometry pipeline 1220, a media pipeline 1230, a display engine 1240, thread execution logic 1250, and a render output pipeline 1270. In some examples, graphics processor 1200 is a graphics processor within a multi-core processing system that includes one or more general-purpose processing cores. The graphics processor is controlled by register writes to one or more control registers (not shown) or via commands issued to graphics processor 1200 via a ring interconnect 1202. In some examples, ring interconnect 1202 couples graphics processor 1200 to other processing components, such as other graphics processors or general-purpose processors. Commands from ring interconnect 1202 are interpreted by a command streamer 1203, which supplies instructions to individual components of the geometry pipeline 1220 or the media pipeline 1230.

In some examples, command streamer 1203 directs the operation of a vertex fetcher 1205 that reads vertex data from memory and executes vertex-processing commands provided by command streamer 1203. In some examples, vertex fetcher 1205 provides vertex data to a vertex shader 1207, which performs coordinate space transformation and lighting operations to each vertex. In some examples, vertex fetcher 1205 and vertex shader 1207 execute vertex-processing instructions by dispatching execution threads to execution units 1252A-1252B via a thread dispatcher 1231.

In some examples, execution units 1252A-1252B are an array of vector processors having an instruction set for performing graphics and media operations. In some examples, execution units 1252A-1252B have an attached L1 cache 1251 that is specific for each array or shared between the arrays. The cache can be configured as a data cache, an instruction cache, or a single cache that is partitioned to contain data and instructions in different partitions.

In some examples, geometry pipeline 1220 includes tessellation components to perform hardware-accelerated tessellation of 3D objects. In some examples, a programmable hull shader 1211 configures the tessellation operations. A programmable domain shader 1217 provides back-end evaluation of tessellation output. A tessellator 1213 operates at the direction of hull shader 1211 and contains special purpose logic to generate a set of detailed geometric objects based on a coarse geometric model that is provided as input to geometry pipeline 1220. In some examples, if tessellation is not used, tessellation components (e.g., hull shader 1211, tessellator 1213, and domain shader 1217) can be bypassed.

In some examples, complete geometric objects can be processed by a geometry shader 1219 via one or more threads dispatched to execution units 1252A-1252B, or can proceed directly to the clipper 1229. In some examples, the geometry shader operates on entire geometric objects, rather than vertices or patches of vertices as in previous stages of the graphics pipeline. If the tessellation is disabled, the geometry shader 1219 receives input from the vertex shader 1207. In some examples, geometry shader 1219 is programmable by a geometry shader program to perform geometry tessellation if the tessellation units are disabled.

Before rasterization, a clipper 1229 processes vertex data. The clipper 1229 may be a fixed function clipper or a programmable clipper having clipping and geometry shader functions. In some examples, a rasterizer and depth test component 1273 in the render output pipeline 1270 dispatches pixel shaders to convert the geometric objects into per pixel representations. In some examples, pixel shader logic is included in thread execution logic 1250. In some examples, an application can bypass the rasterizer and depth test component 1273 and access un-rasterized vertex data via a stream out unit 1223.

The graphics processor 1200 has an interconnect bus, interconnect fabric, or some other interconnect mechanism that allows data and message passing amongst the major components of the processor. In some examples, execution units 1252A-1252B and associated logic units (e.g., L1 cache 1251, sampler 1254, texture cache 1258, etc.) interconnect via a data port 1256 to perform memory access and communicate with render output pipeline components of the processor. In some examples, sampler 1254, caches 1251, 1258 and execution units 1252A-1252B each have separate memory access paths. In some examples the texture cache 1258 can also be configured as a sampler cache.

In some examples, render output pipeline 1270 contains a rasterizer and depth test component 1273 that converts vertex-based objects into an associated pixel-based representation. In some examples, the rasterizer logic includes a windower/masker unit to perform fixed function triangle and line rasterization. An associated render cache 1278 and depth cache 1279 are also available in some examples. A pixel operations component 1277 performs pixel-based operations on the data, though in some instances, pixel operations associated with 2D operations (e.g., bit block image transfers with blending) are performed by the 2D engine 1241, or substituted at display time by the display controller 1243 using overlay display planes. In some examples, a shared L3 cache 1275 is available to all graphics components, allowing the sharing of data without the use of main system memory.

In some examples, graphics processor media pipeline 1230 includes a media engine 1237 and a video front-end 1234. In some examples, video front-end 1234 receives pipeline commands from the command streamer 1203. In some examples, media pipeline 1230 includes a separate command streamer. In some examples, video front-end 1234 processes media commands before sending the command to the media engine 1237. In some examples, media engine 1237 includes thread spawning functionality to spawn threads for dispatch to thread execution logic 1250 via thread dispatcher 1231.

In some examples, graphics processor 1200 includes a display engine 1240. In some examples, display engine 1240 is external to processor 1200 and couples with the graphics processor via the ring interconnect 1202, or some other interconnect bus or fabric. In some examples, display engine 1240 includes a 2D engine 1241 and a display controller 1243. In some examples, display engine 1240 contains special purpose logic capable of operating independently of the 3D pipeline. In some examples, display controller 1243 couples with a display device (not shown), which may be a system integrated display device, as in a laptop computer, or an external display device attached via a display device connector.

In some examples, the geometry pipeline 1220 and media pipeline 1230 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

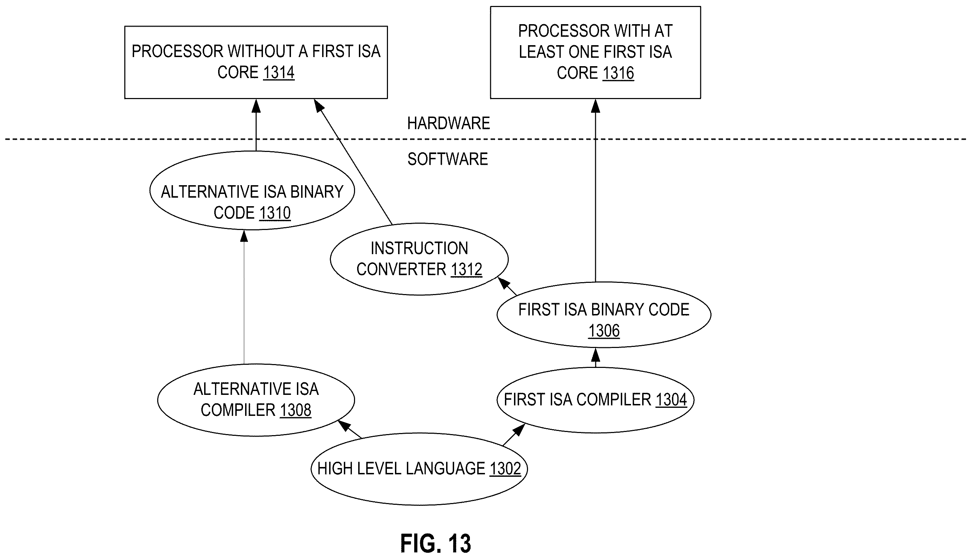

FIG. 13 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 13 shows a program in a high-level language 1302 may be compiled using a first ISA compiler 1304 to generate first ISA binary code 1306 that may be natively executed by a processor with at least one first ISA core 1316. The processor with at least one first ISA core 1316 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1304 represents a compiler that is operable to generate first ISA binary code 1306 (e.g., object code) that can, with or without additional linkage processing, be executed on the processor with at least one first ISA core 1316. Similarly, FIG. 13 shows the program in the high-level language 1302 may be compiled using an alternative ISA compiler 1308 to generate alternative ISA binary code 1310 that may be natively executed by a processor without a first ISA core 1314. The instruction converter 1312 is used to convert the first ISA binary code 1306 into code that may be natively executed by the processor without a first ISA core 1314. This converted code is not necessarily to be the same as the alternative ISA binary code 1310; however, the converted code will accomplish the general operation and be made up of instructions from the alternative ISA. Thus, the instruction converter 1312 represents software, firmware, hardware, or a combination thereof that, through emulation, simulation or any other process, allows a processor or other electronic device that does not have a first ISA processor or core to execute the first ISA binary code 1306.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

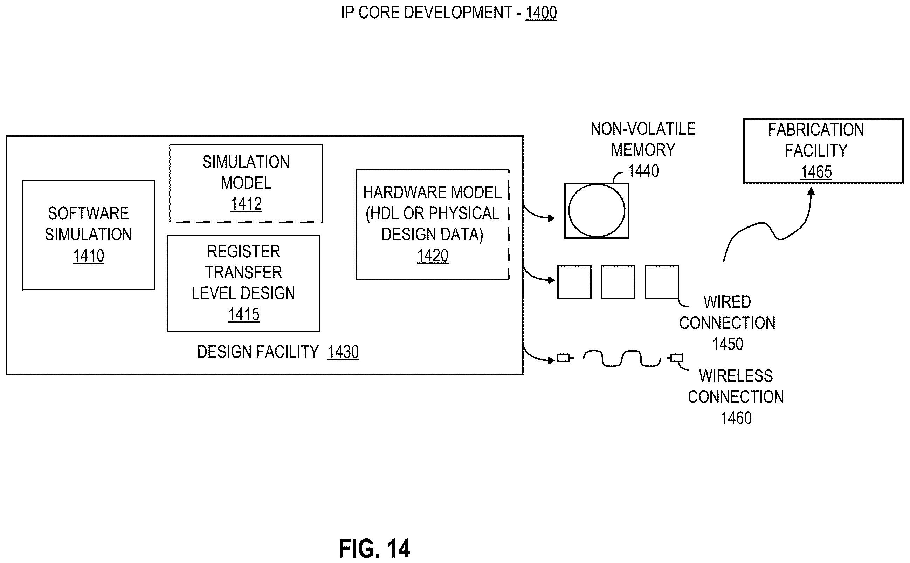

FIG. 14 is a block diagram illustrating an IP core development system 1400 that may be used to manufacture an integrated circuit to perform operations according to some examples. The IP core development system 1400 may be used to generate modular, re-usable designs that can be incorporated into a larger design or used to construct an entire integrated circuit (e.g., an SOC integrated circuit). A design facility 1430 can generate a software simulation 1410 of an IP core design in a high-level programming language (e.g., C/C++). The software simulation 1410 can be used to design, test, and verify the behavior of the IP core using a simulation model 1412. The simulation model 1412 may include functional, behavioral, and/or timing simulations. A register transfer level (RTL) design 1415 can then be created or synthesized from the simulation model 1412. The RTL design 1415 is an abstraction of the behavior of the integrated circuit that models the flow of digital signals between hardware registers, including the associated logic performed using the modeled digital signals. In addition to an RTL design 1415, lower-level designs at the logic level or transistor level may also be created, designed, or synthesized. Thus, the particular details of the initial design and simulation may vary.

The RTL design 1415 or equivalent may be further synthesized by the design facility into a hardware model 1420, which may be in a hardware description language (HDL), or some other representation of physical design data. The HDL may be further simulated or tested to verify the IP core design. The IP core design can be stored for delivery to a 3^{rd} party fabrication facility 1465 using non-volatile memory 1440 (e.g., hard disk, flash memory, or any non-volatile storage medium). Alternatively, the IP core design may be transmitted (e.g., via the Internet) over a wired connection 1450 or wireless connection 1460. The fabrication facility 1465 may then fabricate an integrated circuit that is based at least in part on the IP core design. The fabricated integrated circuit can be configured to perform operations in accordance with at least some examples described herein.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

An embodiment is an implementation or example of the disclosure. Reference in the specification to "an embodiment," "one embodiment," "some embodiments," or "other embodiments" means that a particular feature, structure, or characteristic described in connection with the embodiments is included in at least some embodiments, but not necessarily all embodiments, of the disclosure. The various appearances "an embodiment," "one embodiment," or "some embodiments" are not necessarily all referring to the same embodiments.

Not all components, features, structures, characteristics, etc. described and illustrated herein need to be included in a particular embodiment or embodiments. If the specification states a component, feature, structure, or characteristic "may", "might", "can", or "could" be included, for example, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

The above description of illustrated embodiments of the disclosure, including what is described in the Abstract, is not intended to be exhaustive or to limit the disclosure to the precise forms disclosed. While specific embodiments of, and examples for, the disclosure are described herein for illustrative purposes, various equivalent modifications are possible within the scope of the disclosure, as those skilled in the relevant art will recognize.

These modifications can be made to the disclosure in light of the above detailed description. The terms used in the following claims should not be construed to limit the disclosure to the specific embodiments disclosed in the specification and the drawings. Rather, the scope of the disclosure is to be determined entirely by the following claims, which are to be construed in accordance with established doctrines of claim interpretation.

### Further Examples

Example 1 provides an exemplary method comprising: generating a set of performance monitoring events that each specify an address range within one or more address ranges of memory of a computing system or an application executing in the computing system for which memory access data is to be collected; and performing memory access data collection based on the set of performance monitoring events for the one or more address ranges.

Example 2 includes the substance of Example 1, wherein the memory access data is used to determine which one or more corresponding memory pages are hot based on memory access frequency meeting a criterium.

Example 3 includes the substance of Examples 1 to 2, wherein the memory of the computing system includes a first memory tier and a second memory tier, wherein the first memory tier offers faster access than the second memory tier, and wherein the one or more corresponding memory pages that are hot are moved from the second memory tier to the first memory tier.

Example 4 includes the substance of Examples 1 to 3, wherein the memory access data collection is for profiling of the application executing in the computing system, and wherein limiting performance monitoring to the one or more address ranges of the application is determined based on characteristics of the application.

Example 5 includes the substance of Examples 1 to 4, wherein the address range is specified based on a hint provided by the application executing in the computing system.

Example 6 includes the substance of Examples 1 to 5, wherein the address range is specified by a pair of registers that indicate a starting address and an end address or the starting address and length of the address range.

Example 7 includes the substance of Examples 1 to 6, wherein performing the memory access data collection for the address range comprises iteratively dividing the address range into a plurality of subsections, where the memory access data collection is performed at respective subsections in which memory access meets a certain criterion.

Example 8 includes the substance of Examples 1 to 7, wherein performing the memory access data collection for the address range comprises dividing the address range into a plurality of subsections, the memory access data collection is performed at a first subsection in a first time period and at a second subsection following the first subsection in a second time period following the first time period.

Example 9 includes the substance of Examples 1 to 8, wherein the memory access data collection for the address range is an extension of an existing performance monitoring event, wherein the extension of the existing performance monitoring event performs the memory access data collection only upon memory access being within the address range.

Example 10 includes the substance of Examples 1 to 9, wherein the memory access data collection for the address range occurs only upon a threshold number of memory access events being reached.

Example 11 provides an exemplary computer processor comprising: execution circuitry to execute an application; and performance monitoring circuitry to generate a set of performance monitoring events that each specify an address range within one or more address ranges of memory of a computing system or the application for which memory access data is to be collected, and to cause memory access data collection based on the set of performance monitoring events for the one or more address ranges.

Example 12 includes the substance of Example 11, wherein the memory access data is used to determine which one or more corresponding memory pages are hot based on memory access frequency meeting a criterium.

Example 13 includes the substance of Examples 11 to 12, wherein the memory access data collection is for profiling of the application, and wherein limiting performance monitoring to the one or more address ranges of the application is determined based on characteristics of the application.

Example 14 includes the substance of Examples 11 to 13, wherein the address range is specified by a pair of registers that indicate a starting address and an end address or the starting address and length of the address range.

Example 15 includes the substance of Examples 11 to 14, wherein performing the memory access data collection for the address range comprises iteratively dividing the address range into a plurality of subsections, where the memory access data collection is performed at respective subsections in which memory access meets a certain criterion.

Example 16 provides an exemplary machine-readable storage medium storing instructions that when executed by a machine, are capable of causing the machine to perform: responsive to performing a branch prediction through executing a predicted path of a branch using a first thread of a multi-threaded computer processor, determining whether to initiate a second thread to execute an alternate path of the branch; generating a set of performance monitoring events that each specify an address range within one or more address ranges of memory of a computing system or an application executing in the computing system for which memory access data is to be collected; and performing memory access data collection based on the set of performance monitoring events for the one or more address ranges.

Example 17 includes the substance of Example 16, wherein the address range is specified based on a hint provided by an application of the computing system.

Example 18 includes the substance of Examples 16 to 17, wherein performing the memory access data collection for the address range comprises iteratively dividing the address range into a plurality of subsections, where the memory access data collection is performed at respective subsections in which memory access meets a certain criterion.

Example 19 includes the substance of Examples 16 to 18, wherein performing the memory access data collection for the address range comprises dividing the address range into a plurality of subsections, the memory access data collection is performed at a first subsection in a first time period and at a second subsection following the first subsection in a second time period following the first time period.

Example 20 includes the substance of Examples 16 to 19, wherein the memory access data collection for the address range is an extension of an existing performance monitoring event, wherein the extension of the existing performance monitoring event performs the memory access data collection only upon memory access being within the address range.

### Additional Explanation

Embodiments of the disclosure may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer-readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical, or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more buses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the disclosure may be implemented using different combinations of software, firmware, and/or hardware. Throughout this detailed description, for the purposes of explanation, numerous specific details were set forth in order to provide a thorough understanding of the present disclosure. It will be apparent, however, to one skilled in the art that the disclosure may be practiced without some of these specific details. In certain instances, well-known structures and functions were not described in elaborate detail in order to avoid obscuring the subject matter of the present disclosure. Accordingly, the scope and spirit of the disclosure should be judged in terms of the claims which follow.

## Claims

1. A method comprising:
generating a set of performance monitoring events that each specify an address range within one or more address ranges of memory of a computing system or an application executing in the computing system for which memory access data is to be collected; and
performing memory access data collection based on the set of performance monitoring events for the one or more address ranges.

2. The method of claim 1, wherein the memory access data is used to determine which one or more corresponding memory pages are hot based on memory access frequency meeting a criterium.

3. The method of any of claims 1 or 2, wherein the memory of the computing system includes a first memory tier and a second memory tier, wherein the first memory tier offers faster access than the second memory tier, and wherein the one or more corresponding memory pages that are hot are moved from the second memory tier to the first memory tier.

4. The method of any of claims 1 to 3, wherein the memory access data collection is for profiling of the application executing in the computing system, and wherein limiting performance monitoring to the one or more address ranges of the application is determined based on characteristics of the application.

5. The method of any of claims 1 to 4, wherein the address range is specified based on a hint provided by the application executing in the computing system.

6. The method of any of claims 1 to 5, wherein the address range is specified by a pair of registers that indicate a starting address and an end address or the starting address and length of the address range.

7. The method of any of claims 1 to 6, wherein performing the memory access data collection for the address range comprises iteratively dividing the address range into a plurality of subsections, where the memory access data collection is performed at respective subsections in which memory access meets a certain criterion.

8. The method of any of claims 1 to 7, wherein performing the memory access data collection for the address range comprises dividing the address range into a plurality of subsections, the memory access data collection is performed at a first subsection in a first time period and at a second subsection following the first subsection in a second time period following the first time period.

9. The method of any of claims 1 to 8, wherein the memory access data collection for the address range is an extension of an existing performance monitoring event, wherein the extension of the existing performance monitoring event performs the memory access data collection only upon memory access being within the address range.

10. The method of any of claims 1 to 9, wherein the memory access data collection for the address range occurs only upon a threshold number of memory access events being reached.

11. A computer processor comprising:
execution circuitry to execute an application; and
performance monitoring circuitry to generate a set of performance monitoring events that each specify an address range within one or more address ranges of memory of a computing system or the application for which memory access data is to be collected, and to cause memory access data collection based on the set of performance monitoring events for the one or more address ranges.

12. The computer processor of claim 11, wherein the memory access data is used to determine which one or more corresponding memory pages are hot based on memory access frequency meeting a criterium.

13. The computer processor of claim 11 or 12, wherein the memory access data collection is for profiling of the application, and wherein limiting performance monitoring to the one or more address ranges of the application is determined based on characteristics of the application.

14. The computer processor of any of claims 11 to 13, wherein the address range is specified by a pair of registers that indicate a starting address and an end address or the starting address and length of the address range.

15. A machine-readable storage medium storing instructions that when executed by a machine, are capable of causing the machine to perform any of methods 1 to 10.
